# EUROPEAN PATENT APPLICATION

(11) **EP 4 746 576 A1**
(43) Date of publication of application: **20.05.2026**
(21) Application number: 23944707.1
(22) Date of filing: 12.07.2023
(51) Int. Cl.: H04W 76/11

(54) **PDU SESSION PROCESSING METHOD, FIRST CORE NETWORK FUNCTION, AND SECOND CORE NETWORK FUNCTION**

(71) Applicant: Beijing Xiaomi Mobile Software Co., Ltd., Beijing 100085 (CN)
(72) Inventor: WU, Jinhua, Beijing 100085 (CN); SHEN, Yang, Beijing 100085 (CN); MAO, Yuxin, Beijing 100085 (CN)
(74) Representative: Stöckeler, Ferdinand
(86) International application number: PCT/CN2023/107091
(87) International publication number: WO 2025/010687

(57) **Abstract**

Embodiments of the present disclosure provide a packet data unit (PDU) session processing method, a first core network function, and a second core network function. The method comprises: a first core network function receiving a first request message sent by a second core network fiction, wherein the first request message is used for requesting to activate or deactivate at least one PDU session; and on the basis of a group identifier associated with the PDU session, executing processing related to activation or deactivation of the PDU session, wherein the group identifier is used for indicating a group, one group comprises the PDU session of at least one user equipment (UE), or one group comprises at least one UE. The technical solution provided by the embodiments of the present disclosure can improve the quality of service and/or user experience of a plurality of PDU sessions having correlation.

## Description

### TECHNICAL FIELD

The disclosure relates to the field of communication technologies, and in particular to a method for processing a packet data unit (PDU) session, a first core network function, a second core network function, a user equipment (UE), a communication system, and a storage medium.

### BACKGROUND

With the continuous development of wireless cellular communication technologies, in particular to the development of 5th generation (5G) mobile communication technology, services such as mobile media services, cloud augmented reality (AR)/virtual reality (VR) and other extended reality (XR) services, cloud gaming, and video-based remote control of machines or drones are also developed rapidly.

In addition to audio and video streams, the XR services involve multimodal data streams, such as data streams for bio-haptic perception. The various data streams of the XR multimodal service have a strong correlation, and in many scenarios, the data streams of the service may be distributed across a plurality of user equipments (UEs). The XR multimodal service may have a plurality of packet data unit (PDU) sessions, and processing policies for the plurality of PDU sessions may be inconsistent, thus preventing the network from guaranteeing the user experience of the XR multimodal service.

### SUMMARY

Considering the correlation among a plurality of packet data unit (PDU) sessions, it is necessary to improve a service quality and/or service experience of the plurality of PDU sessions correlated.

Embodiments of the disclosure provide a method for processing a PDU session, a first core network function, a second core network function, a UE, a communication system, and a storage medium.

According to a first aspect of embodiments of the disclosure, a method for processing a PDU session is provided. The method includes: receiving, by a first core network function, a first request message sent by a second core network function, in which the first request message is configured to request activation or deactivation of at least one PDU session; and performing processing related to the activation or deactivation of the PDU session based on a group identifier (ID) associated with the PDU session, in which the group ID indicates a group, and the group includes PDU sessions of at least one user equipment (UE), or the group includes at least one UE.

According to a second aspect of embodiments of the disclosure, a method for processing a PDU session is provided. The method includes: sending, by a second core network function, a first request message to a first core network function, in which the first request message includes a group ID; the group ID indicates a group, and the group includes PDU sessions of at least one UE, or the group includes at least one UE; and the first request message is associated with activation or deactivation of the PDU session.

According to a third aspect of embodiments of the disclosure, a method for processing a PDU session is provided. The method includes: sending, by a UE, a second request message to a second core network function, in which the second request message is configured to trigger the second core network function to send a first request message including a group ID to a first core network function, the group ID indicates a group, and the group includes PDU sessions of at least one UE, or the group includes at least one UE; and the first request message is associated with activation or deactivation of the PDU session.

According to a fourth aspect of embodiments of the disclosure, a method for processing a PDU session is provided. The method is performed by a communication system, including: sending, by a UE, a second request message to a second core network function; sending, by the second core network function, a first request message to a first core network function, in which the first request message is configured to request activation or deactivation of at least one PDU session; and performing, by the first core network function, processing related to the activation or deactivation of the PDU session based on a group ID associated with the PDU session, in which the group ID indicates a group, and the group includes a PDU sessions of at least one UE, or the group includes at least one UE.

According to a fifth aspect of embodiments of the disclosure, a first core network function is provided. The first core network function includes: a first transceiver module, configured to receive a first request message sent by a second core network function, in which the first request message is configured to request activation or deactivation of at least one PDU session; and a first processing module, configured to perform processing related to the activation or deactivation of the PDU session based on a group ID associated with the PDU session, in which the group ID indicates a group, and the group includes PDU sessions of at least one UE, or the group includes at least one UE.

According to a sixth aspect of embodiments of the disclosure, a second core network function is provided. The second core network function includes: a second transceiver module, configured to send a first request message to a first core network function, in which the first request message includes a group ID; the group ID indicates a group, and the group includes PDU sessions of at least one UE, or the group includes at least one UE; and the first request message is associated with activation or deactivation of the PDU session.

According to a seventh aspect of embodiments of the disclosure, a core network device is provided. The core network device includes: a second core network function, configured to send a first request message to a first core network function, in which the first request message includes a group ID; the group ID indicates a group, and the group includes PDU sessions of at least one UE, or the group includes at least one UE; and the first request message is associated with activation or deactivation of the PDU session; and a first core network function, configured to receive the first request message and perform processing related to the activation or deactivation of the PDU session based on the group ID.

According to an eighth aspect of embodiments of the disclosure, a terminal is provided. The terminal includes: a third transceiver module, configured to send a second request message to a second core network function, in which the second request message is configured to trigger the second core network function to send a first request message including a group ID to a first core network function, the group ID indicates a group, and the group includes PDU sessions of at least one UE, or the group includes at least one UE; and the first request message is associated with activation or deactivation of the PDU session.

According to a ninth aspect of embodiments of the disclosure, a communication system is provided. The communication system includes: a UE configured to perform the above method for processing a PDU session in the third aspect, a first core network function configured to perform the above method for processing a PDU session in the first aspect, and a second core network function configured to perform the above method for processing a PDU session in the second aspect.

According to a tenth aspect of embodiments of the disclosure, a first core network function is provided. The first core network function includes: one or more processors, in which the one or more processors are configured to call instructions to cause the first core network function to implement the above method for processing a PDU session in the first aspect.

According to an eleventh aspect of embodiments of the disclosure, a second core network function is provided. The second core network function includes: one or more processors, in which the one or more processors are configured to call instructions to cause the second core network function to implement the above method for processing a PDU session in the second aspect.

According to a twelfth aspect of embodiments of the disclosure, a core network device is provided. The core network device includes: one or more processors, in which the one or more processors are configured to call instructions to cause the core network device to implement the above method for processing a PDU session in the first aspect or the above method for processing a PDU session in the second aspect.

According to a thirteenth aspect of embodiments of the disclosure, a UE is provided. The UE includes: one or more processors, in which the one or more processors are configured to call instructions to cause the UE to implement the above method for processing a PDU session in the third aspect.

According to a fourteenth aspect of embodiments of the disclosure, a storage medium is provided. The storage medium stores instructions that, when executed on a communication device, cause the communication device to implement the above method for processing a PDU session in the first aspect, the above method for processing a PDU session in the second aspect or the above method for processing a PDU session in the third aspect.

The technical solution provided in embodiments of the disclosure may improve the service quality and/or user experience of the plurality of PDU sessions correlated.

It should be understood that the above general description and the following detailed description are only exemplary and explanatory, and do not limit embodiments of the disclosure.

### BRIEF DESCRIPTION OF THE DRAWINGS

The figures here are incorporated into the specification and constitute a part of the specification, which conform to embodiments of the disclosure, and are used together with the specification to explain the principles of embodiments of the disclosure.
FIG. 1a is an architecture diagram illustrating a communication system according to an embodiment of the disclosure.
FIG. 1b is an architecture diagram illustrating a core network device according to an embodiment of the disclosure.
FIG. 2a is a flowchart illustrating a method for processing a packet data unit (PDU) session according to an embodiment of the disclosure.
FIG. 2b is a flowchart illustrating a method for processing a PDU session according to an embodiment of the disclosure.
FIG. 3a is a flowchart illustrating a method for processing a PDU session according to an embodiment of the disclosure.
FIG. 3b is a flowchart illustrating a method for processing a PDU session according to an embodiment of the disclosure.
FIG. 3c is a flowchart illustrating a method for processing a PDU session according to an embodiment of the disclosure.
FIG. 4a is a flowchart illustrating a method for processing a PDU session according to an embodiment of the disclosure.
FIG. 4b is a flowchart illustrating a method for processing a PDU session according to an embodiment of the disclosure.
FIG. 4c is a flowchart illustrating a method for processing a PDU session according to an embodiment of the disclosure.
FIG. 4d is a flowchart illustrating a method for processing a PDU session according to an embodiment of the disclosure.
FIG. 5 is a flowchart illustrating a method for processing a PDU session according to an embodiment of the disclosure.
FIG. 6a is a flowchart illustrating a method for processing a PDU session according to an embodiment of the disclosure.
FIG. 6b is a flowchart illustrating a method for processing a PDU session according to an embodiment of the disclosure.
FIG. 6c is a flowchart illustrating a method for processing a PDU session according to an embodiment of the disclosure.
FIG. 7a is a block diagram illustrating a first core network function according to an embodiment of the disclosure.
FIG. 7b is a block diagram illustrating a second core network function according to an embodiment of the disclosure.
FIG. 7c is a block diagram illustrating a terminal according to an embodiment of the disclosure.
FIG. 8a is a block diagram illustrating a user equipment (UE) according to an embodiment of the disclosure.
FIG. 8b is a block diagram illustrating a communication device according to an embodiment of the disclosure.

### DETAILED DESCRIPTION

Embodiments of the disclosure provide a method for processing a packet data unit (PDU) session, a first core network function, a second core network function, a UE, a communication system, and a storage medium.

In a first aspect, embodiments of the disclosure provide a method for processing a PDU session. The method includes: receiving, by a first core network function, a first request message sent by a second core network function, in which the first request message is configured to request activation or deactivation of at least one PDU session; and performing processing related to the activation or deactivation of the PDU session based on a group identifier (ID) associated with the PDU session, in which the group ID indicates a group, and the group includes PDU sessions of at least one user equipment (UE), or the group includes at least one UE.

In the above embodiment, by receiving the first request message from the second core network function, the first core network function may determine a group involved in a PDU session which the first request message requests to activate or deactivate, based on the group ID associated with the PDU session which the first request message requests to activate or deactivate, and performs processing related to the activation or deactivation of the PDU session. In this way, the correlation of the plurality of PDU sessions is considered, which thus enables that the activation or deactivation of the correlated PDU sessions is adapted to the correlation, and improves the session quality and user experience of the PDU session.

In combination with some embodiments of the first aspect, in some embodiments, the first request message includes the group ID.

In the above embodiment, the first request message carries the group ID, thus the first core network function may directly obtain the group ID from the first request message, which facilitates performing the processing related to the activation or deactivation of the PDU session based on the group ID.

In combination with some embodiments of the first aspect, in some embodiments, the method further includes: determining the group ID based on a first configuration and/or first information.

In the above embodiment, after receiving the first request message, the first core network function may independently determine the group ID associated with the PDU session requested to be activated or deactivated based on the first configuration and/or the first information. Thus, when the processing related to the activation or deactivation of the PDU session is performed, the correlation of the plurality of PDU sessions associated with the group ID is considered.

In combination with some embodiments of the first aspect, in some embodiments, the first configuration includes at least one of: a local configuration; or an operation administration and maintenance (OAM) configuration; and/or the first information, provided by a policy control function (PCF) or a network exposure function (NEF).

In the above embodiment, the first core network function may determine the group ID associated with the PDU session requested to be activated or deactivated based on the local configuration, the OAM configuration, and/or the first information provided by the NEF or the PCF, thus improving the flexibility for determining the group ID.

In combination with some embodiments of the first aspect, in some embodiments, performing the processing related to the activation or deactivation of the PDU session based on the group ID includes: determining a target policy based on the group ID; and performing the processing related to the activation or deactivation of the PDU session based on the target policy.

In the above embodiment, by determining the target policy corresponding to the group ID and using the target policy, the first core network function performs the processing related to the activation or deactivation of the PDU session associated with the first request message. In this way, different target policies are determined based on different correlations of the plurality of PDU sessions associated with the group, which thus enables that the activation or deactivation of the plurality of PDU sessions associated with the group is adapted to the correlation of the plurality of PDU sessions, and improves the session quality and user experience of the PDU sessions.

In combination with some embodiments of the first aspect, in some embodiments, performing the processing related to the activation or deactivation of the PDU session based on the target policy includes at least one of: for the target policy being a first policy, rejecting or accepting activation of each PDU session associated with the group ID; for the target policy being a first policy, accepting deactivation of each PDU session associated with the group ID; for the target policy being a second policy, rejecting activation of one or more PDU sessions associated with the group ID based on a priority; or for the target policy being a second policy, accepting deactivation of one or more PDU sessions associated with the group ID based on a priority.

In the above embodiment, by performing activation or deactivation processing of the PDU session associated with the group ID based on the first policy or the second policy, the first core network function may adapt the activation or deactivation of the plurality of PDU sessions associated with the group to importance levels of the plurality of PDU sessions associated with the group based on differences of the importance levels of the plurality of PDU sessions associated with the group, in the case of ensuring that the activation or deactivation of the plurality of PDU sessions associated with the group is adapted to the correlation of the plurality of PDU sessions, which thus improves the flexibility of the first core network function when performing the processing related to the activation or deactivation of one or more PDU sessions associated with the group ID.

In combination with some embodiments of the first aspect, in some embodiments, the priority includes: a group priority and/or a PDU session priority.

In the above embodiment, the first core network function performs the processing related to the activation or deactivation of one or more PDU sessions associated with the group ID, based on the group priority corresponding to the group ID and/or the PDU session priority of the plurality of PDU sessions associated with the group ID, so as to guarantee normal activation or deactivation of each PDU session associated with a higher-priority group, or normal activation or deactivation of a higher-priority PDU session within one group.

In combination with some embodiments of the first aspect, in some embodiments, performing the processing related to the activation or deactivation of the PDU session based on the target policy includes: performing admission control of PDU session activation on a PDU session associated with a network slice and/or a group associated with a network slice, based on the target policy; and accepting or rejecting the activation of the PDU session based on a result of the admission control.

In the above embodiment, the first core network function performs the admission control of the PDU session activation on the PDU session associated with the network slice and/or the group associated with the network slice, based on the target policy corresponding to the group ID, to determine whether the PDU session is capable of being established on the network slice, and determines to accept or reject the activation of the PDU session based on the admission capability of the network slice.

In combination with some embodiments of the first aspect, in some embodiments, the first request message includes: an update ID, in which the update ID is configured to request addition or deletion of an activated PDU session associated with the network slice.

In the above embodiment, the first core network function may determine that the first request message requests the addition or deletion of the activated PDU session associated with the network slice, based on the update ID carried in the first request message, thus performing the activation or deactivation processing of the PDU session related to the first request message.

In combination with some embodiments of the first aspect, in some embodiments, performing the admission control of the PDU session activation on the PDU session associated with the network slice and/or the group associated with the network slice based on the target policy includes: for the update ID that requests addition of the activated PDU session associated with the network slice, determining whether to activate the PDU session based on a number of PDU sessions activated by the network slice, a number of PDU sessions allowed to be activated by the network slice, and the target policy; and/or, for the update ID that requests addition of the activated PDU session associated with the network slice, determining whether to activate the PDU session based on a number of groups involved in PDU sessions activated by the network slice, a number of groups allowed by the network slice, and the target policy.

In the above embodiment, in the case that the update ID requests the addition of the activated PDU session associated with the network slice, the first core network function may determine whether to activate the PDU session based on the target policy corresponding to the group ID, and whether the number of PDU sessions allowed to be activated by the network slice is reached, or whether the number of groups allowed by the network slice is reached. Thus, during the admission control of the one or more PDU sessions activation associated with the group ID, the target policy corresponding to the group ID, and the PDU session activation capability or the group activation capability of the network slice are fully considered.

In combination with some embodiments of the first aspect, in some embodiments, determining whether to activate the PDU session based on the number of PDU sessions activated by the network slice, the number of PDU sessions allowed to be activated by the network slice, and the target policy includes at least one of: in a case that the number of PDU sessions activated by the network slice is equal to or greater than the number of PDU sessions allowed to be activated by the network slice and the target policy is a first policy, determining to reject activation of each PDU session associated with the group ID; in a case that the number of PDU sessions activated by the network slice is less than the number of PDU sessions allowed to be activated by the network slice and the target policy is the first policy, determining to accept activation of the PDU session; in a case that the number of PDU sessions activated by the network slice is equal to the number of PDU sessions allowed to be activated by the network slice and the target policy is a second policy, determining to reject activation of each PDU session associated with the group ID; in a case that the number of PDU sessions activated by the network slice is less than the number of PDU sessions allowed to be activated by the network slice and the target policy is the second policy, and a number of PDU sessions to be activated is less than or equal to a number of PDU sessions that the network slice is further capable of activating, determining to accept activation of each PDU session associated with the group ID; or in a case that the number of PDU sessions activated by the network slice is less than the number of PDU sessions allowed to be activated by the network slice and the target policy is the second policy, and the number of PDU sessions to be activated is greater than the number of PDU sessions that the network slice is further capable of activating, determining to accept activation of a part of the PDU sessions to be activated and to reject activation of another part of the PDU sessions to be activated, based on a group priority of a group associated with the PDU sessions to be activated and/or a priority of the PDU sessions to be activated; in which the number of PDU sessions that the network slice is further capable of activating is a difference between the number of PDU sessions allowed to be activated by the network slice and the number of PDU sessions activated by the network slice.

In the above embodiment, in different cases that the target policy corresponding to the group ID is different, and/or whether the number of PDU sessions allowed to be activated by the network slice is reached, the first core network function determines to accept or reject the activation of the one or more PDU sessions associated with the group ID based on the specific situation. Thus, during the admission control of the one or more PDU sessions activation associated with the group ID, the target policy corresponding to the group ID and the PDU session activation capability of the network slice are fully considered.

In combination with some embodiments of the first aspect, in some embodiments, the method further includes: in a case that the activation of the PDU session is accepted and the group ID is not added to a first list, adding the group ID to the first list, and associating a session ID of the activated PDU session with a corresponding group ID; in which the first list includes a group ID associated with an activated PDU session; or, in a case that the activation of the PDU session is accepted and the group ID is added to the first list, associating a session ID of the activated PDU session with a corresponding group ID.

In the above embodiment, when determining to accept the activation of the PDU session involved in the first request message, the first core network function determines whether to increase the number of groups involved in activated PDU sessions related to the network slice, based on whether the group ID included in the first request message is the group ID associated with the activated PDU session

In combination with some embodiments of the first aspect, in some embodiments, for the update ID that requests addition of the activated PDU session associated with the network slice, determining whether to activate the PDU session based on the number of groups involved in the PDU sessions activated by the network slice, the number of groups allowed by the network slice, and the target policy includes: for the update ID that requests addition of the activated PDU session associated with the network slice, determining to accept or reject activation of the PDU session based on the number of groups involved in the PDU sessions activated by the network slice, the number of groups allowed by the network slice, the target policy, and whether the group ID is added to a first list, in which the first list includes a group ID associated with the activated PDU session; and/or, for the update ID that requests addition of the activated PDU session associated with the network slice, determining to accept or reject activation of the PDU session based on the number of groups involved in the PDU sessions activated by the network slice, the number of groups allowed by the network slice, the target policy, and whether the number of PDU sessions activated by the network slice is equal to the number of PDU sessions allowed to be activated by the network slice.

In the above embodiment, in the case that the update ID requests the addition of the activated PDU session associated with the network slice, the first core network function may determine whether to activate the PDU session based on the target policy corresponding to the group ID, whether the number of groups allowed by the network slice is reached, and whether the group ID is the group ID associated with the activated PDU session or whether the number of PDU sessions allowed by the network slice is reached. Thus, during the admission control of the one or more PDU sessions activation associated with the group ID, the target policy corresponding to the group ID, the group activation capability of the network slice, and the PDU session activation capability of the network slice are fully considered.

In combination with some embodiments of the first aspect, in some embodiments, for the update ID that requests addition of the activated PDU session associated with the network slice, determining to accept or reject activation of the PDU session based on the number of groups involved in the PDU sessions activated by the network slice, the number of groups allowed by the network slice, the target policy, and whether the group ID is added to the first list includes at least one of: in a case that a number of groups associated with the PDU sessions activated by the network slice is less than the number of groups allowed by the network slice, the group ID is not added to the first list, and the target policy is a first policy, determining to accept activation of each PDU session associated with the same group ID; in a case that the number of groups associated with the PDU sessions activated by the network slice is equal to or greater than the number of groups allowed by the network slice, the group ID is not added to the first list, and the target policy is the first policy, determining to reject activation of each PDU session associated with the same group ID; in a case that the number of groups associated with the PDU sessions activated by the network slice is less than the number of groups allowed by the network slice, the group ID is added to the first list, and the target policy is the first policy, determining to accept activation of each PDU session associated with the same group ID; in a case that the number of groups associated with the PDU sessions activated by the network slice is equal to the number of groups allowed by the network slice, the group ID is added to the first list, and the target policy is the first policy, determining to accept activation of each PDU session associated with the same group ID; in a case that the number of groups associated with the PDU sessions activated by the network slice is less than the number of groups allowed by the network slice, the group ID is not added to the first list, and the target policy is a second policy, adding a group ID of a first priority to the first list, and determining to accept activation of a PDU session in a group of the first priority; in a case that the number of groups associated with the PDU sessions activated by the network slice is less than the number of groups allowed by the network slice, the group ID is not added to the first list, and the target policy is the second policy, adding a group ID of a second priority to the first list, and determining to reject activation of a PDU session in a group of the second priority, in which the second priority is lower than the first priority; in a case that the number of groups associated with the PDU sessions activated by the network slice is less than the number of groups allowed by the network slice, the group ID is added to the first list, and the target policy is the second policy, determining to accept activation of the PDU session; or in a case that the number of groups associated with the PDU sessions activated by the network slice is equal to the number of groups allowed by the network slice, the group ID is added to the first list, and the target policy is the second policy, determining to accept or reject activation of the PDU session, based on the number of PDU sessions allowed to be activated by the network slice and the number of PDU sessions activated by the network slice.

In the above embodiment, in different cases that the target policy corresponding to the group ID is different, whether the number of groups allowed to be activated by the network slice is reached, and/or whether the group ID is the group ID associated with the activated PDU session, the first core network function determines to accept or reject activation of the one or more PDU sessions associated with the group ID based on the specific situation. Thus, during the admission control of the one or more PDU sessions activation associated with the group ID, the target policy corresponding to the group ID and the group activation capability of the network slice are fully considered.

In combination with some embodiments of the first aspect, in some embodiments, in the case that the number of groups associated with the PDU sessions activated by the network slice is equal to the number of groups allowed by the network slice, the group ID is added to the first list, and the target policy is the second policy, determining to accept or reject activation of the PDU session, based on the number of PDU sessions allowed to be activated by the network slice and the number of PDU sessions activated by the network slice includes at least one of: in a case that the number of groups associated with the PDU sessions activated by the network slice is equal to the number of groups allowed by the network slice, the group ID is added to the first list, the target policy is the second policy, and a number of PDU sessions to be activated is less than or equal to a number of PDU sessions that the network slice is further capable of activating, determining to accept activation of the PDU sessions to be activated; or in a case that the number of groups associated with the PDU sessions activated by the network slice is equal to the number of groups allowed by the network slice, the group ID is added to the first list, the target policy is the second policy, and the number of PDU sessions to be activated is greater than the number of PDU sessions that the network slice is further capable of activating, determining, based on the PDU session, to accept activation of a PDU session to be activated of a third priority and to reject activation of a PDU session to be activated of a fourth priority, in which the third priority is higher than the fourth priority, in which the number of PDU sessions that the network slice is further capable of activating is a difference between the number of PDU sessions allowed to be activated by the network slice and the number of PDU sessions activated by the network slice.

In the above embodiment, in the case that the number of groups allowed to be activated by the network slice is reached, the group ID is the group ID associated with the activated PDU session, and the activation processing is determined to be performed based on the second policy, the first core network function accepts or rejects the activation of the one or more PDU sessions associated with the group ID based on whether the number of PDU sessions to be activated exceeds the number of PDU sessions that the network slice is further capable of activating. Thus, during the admission control of the PDU session activation, both the PDU session activation capability of the network slice and the priority of the PDU sessions are considered.

In combination with some embodiments of the first aspect, in some embodiments, for the update ID that requests addition of the activated PDU session associated with the network slice, determining to accept or reject activation of the PDU session based on the number of groups involved in the PDU sessions activated by the network slice, the number of groups allowed by the network slice, the target policy, and whether the number of PDU sessions activated by the network slice is equal to the number of PDU sessions allowed to be activated by the network slice includes at least one of: in a case that the number of groups associated with the PDU sessions activated by the network slice is equal to or greater than the number of groups allowed by the network slice, the group ID is not added to the first list, and the number of PDU sessions activated by the network slice is equal to or greater than the number of PDU sessions allowed to be activated by the network slice, determining to reject activation of the PDU sessions to be activated; in a case that the number of groups associated with the PDU sessions activated by the network slice is equal to or greater than the number of groups allowed by the network slice, the group ID is added to the first list, and the number of PDU sessions activated by the network slice is equal to or greater than the number of PDU sessions allowed to be activated by the network slice, determining to reject activation of the PDU sessions to be activated; in a case that the number of groups associated with the PDU sessions activated by the network slice is less than the number of groups allowed by the network slice, the group ID is not added to the first list, and the number of PDU sessions activated by the network slice is less than the number of PDU sessions allowed to be activated by the network slice, adding the group ID to the first list, and determining to accept activation of the PDU sessions to be activated; in a case that the number of groups associated with the PDU sessions activated by the network slice is less than the number of groups allowed by the network slice, the group ID is not added to the first list, the number of PDU sessions activated by the network slice is equal to or greater than the number of PDU sessions allowed to be activated by the network slice, and the target policy is a first policy, determining to reject each PDU session to be activated in the same group; or in a case that the number of groups associated with the PDU sessions activated by the network slice is less than the number of groups allowed by the network slice, the group ID is not added to the first list, the number of PDU sessions activated by the network slice is equal to or greater than the number of PDU sessions allowed to be activated by the network slice, and the target policy is a second policy, determining to accept activation of a part of the PDU sessions to be activated and to reject activation of another part of the PDU sessions to be activated, based on a group priority and/or a PDU session priority, in which the first list includes a group ID associated with a PDU session activated by the network slice.

In the above embodiment, in different cases that the target policy corresponding to the group ID is different, whether the number of groups allowed to be activated by the network slice is reached, whether the group ID is the group ID associated with the activated PDU session, and whether the number of PDU sessions allowed to be activated by the network slice is reached, the first core network function determines to accept or reject the activation of the one or more PDU sessions associated with the group ID based on the specific situation. Thus, during the admission control of the one or more PDU sessions activation associated with the group ID, the target policy corresponding to the group ID, the group activation capability of the network slice, and the PDU session activation capability of the network slice are fully considered.

In combination with some embodiments of the first aspect, in some embodiments, performing the processing related to the activation or deactivation of the PDU session based on the group ID includes at least one of: in a case that the PDU session of one group ID involves a plurality of service areas, and there is at least one service area among the plurality of service areas in which a number of PDU sessions that a network slice is further capable of activating is greater than a number of PDU sessions to be activated associated with the group ID, determining to accept activation of the PDU sessions to be activated; or in a case that the PDU session of one group ID involves the plurality of service areas, and there is no service area among the plurality of service areas in which the number of PDU sessions that the network slice is further capable of activating is greater than the number of PDU sessions to be activated associated with the group ID, determining to reject activation of the PDU sessions to be activated, in which the number of PDU sessions that the network slice is further capable of activating is a difference between a number of PDU sessions allowed to be activated by the network slice and a number of PDU sessions activated by the network slice.

In the above embodiment, in the case that the PDU session associated with one group ID involves the plurality of service areas, whether to accept or reject the activation of the PDU sessions is determined based on a maximum value of the number of PDU sessions allowed to be activated by the network slice within the plurality of service areas, thus reducing differences in the activation or deactivation processing of the plurality of PDU sessions involved in the same group.

In combination with some embodiments of the first aspect, in some embodiments, performing the processing related to the activation or deactivation of the PDU session based on the group ID includes: for the update ID that requests deletion of the activated PDU session associated with the network slice, deactivating the PDU session.

In the above embodiment, after receiving the first request message, and when the update ID within the first request message requests the deletion of the activated PDU session associated with the network slice, the first core network function performs the PDU session deactivation to release network resources.

In combination with some embodiments of the first aspect, in some embodiments, the method further includes: in a case that a last PDU session of one group ID is deactivated, deleting the group ID from a first list; in which the first list includes the group ID of the activated PDU session.

In the above embodiment, in the case that the first core network function determines that the last PDU session associated with the group ID on the network slice is deactivated, the first core network function may directly delete the group ID from the first list to update the number of groups associated with PDU sessions activated by the network slice.

In combination with some embodiments of the first aspect, in some embodiments, the first request message includes: a PDU session number update request; and/or a PDU session number availability check and update request.

In the above embodiment, by carrying the group ID within the PDU session number update request and/or the PDU session number availability check and update request, compared to a method for canying the group ID via a dedicated request message, the existing signaling may be reused and the signaling overhead may be reduced.

In combination with some embodiments of the first aspect, in some embodiments, the first request message carries access type information, the access type information indicates an access type of the PDU session; and the method further includes: determining the number of PDU sessions allowed to be activated, based on an access type corresponding to the network slice.

In the above embodiment, by carrying the access type information in the first request message, the first core network function may determine the access type of the PDU session based on the access type information, and thus determine to accept or reject the activation of the PDU session based on the number of PDU sessions allowed to be activated for the access type corresponding to the network slice.

In combination with some embodiments of the first aspect, in some embodiments, the method further includes: sending a first response message to the second core network function; in which the first response message is configured to trigger the second core network function to establish or release the PDU session.

In the above embodiment, after determining to accept or reject the activation or deactivation of the PDU session, the first core network function may send the first response message to the second core network function, to inform the second core network function that the requested activation or deactivation of the PDU session is accepted or rejected, thus facilitating the second core network function to determine whether to establish or release the PDU session.

In combination with some embodiments of the first aspect, in some embodiments, the first response message indicates accepting or rejecting the activation of the PDU session.

In the above embodiment, after determining to accept or reject the activation or deactivation of the PDU session, the first core network function may send the first response message to the second core network function, to inform the second core network function of the result.

In combination with some embodiments of the first aspect, in some embodiments, the first response message indicates rejecting the activation of the PDU session, and the first response message includes at least one of: a rejecting cause; a restricted access type; or time information indicating a duration for which a UE suspends requesting PDU session activation.

In the above embodiment, after determining to reject the activation of the PDU session, the first core network function may carry the above information within the first response message, so that the second core network function may set information related to access restrictions based on the above information.

In combination with some embodiments of the first aspect, in some embodiments, the first core network function is a network slice admission control function (NSACF).

In the above embodiment, by specifying that the NSACF performs the above method for processing a PDU session, an execution function of the NSACF is enhanced, and better admission control of the PDU sessions is thus achieved, which improves the session quality and user experience of the PDU sessions.

In combination with some embodiments of the first aspect, in some embodiments, the NSACF is: an NSACF in a single central architecture; an NSACF within a service area related to the second core network function in a non-hierarchical multi-NSACF architecture; or a local NSACF or a primary NSACF in a hierarchical multi-NSACF architecture.

In the above embodiment, by specifying that the NSACF is any one of the above three architectures, an entity executing the method for processing a PDU session has higher flexibility.

In a second aspect, an embodiment of the disclosure provides a method for processing a PDU session. The method includes: sending, by a second core network function, a first request message to a first core network function, in which the first request message includes a group ID; the group ID indicates a group, and the group includes PDU sessions of at least one UE, or the group includes at least one UE; and the first request message is associated with activation or deactivation of the PDU session.

In the above embodiment, by sending the first request message including the group ID to the first core network function, the second core network function requests the first core network function to perform the processing related to the activation or deactivation of the PDU session. In this way, it may be fully considered the group involved in the PDU session requested to be activated or deactivated by the first request message, that is, the correlation of the plurality of PDU sessions may be fully considered. Thus, the activation or deactivation of the correlated PDU sessions is adapted to the correlation, which improves the session quality and user experience of the PDU sessions.

In a third aspect, an embodiment of the disclosure provides a method for processing a PDU session. The method includes: sending, by a UE, a second request message to a second core network function, in which the second request message is configured to trigger the second core network function to send a first request message including a group ID to a first core network function, the group ID indicates a group, and the group includes PDU sessions of at least one UE, or the group includes at least one UE; and the first request message is associated with activation or deactivation of the PDU session.

In the above embodiment, by sending the second request message to the second core network function, the UE triggers the second core network function to send the first request message including the group ID to the first core network function, requests the first core network function to perform processing related to the activation or deactivation of a PDU session which the first request message requests to activate or deactivate, based on the group involved in the PDU session. In this way, the correlation of the plurality of PDU sessions is fully considered, which thus enables that the activation or deactivation of the correlated PDU sessions is adapted to the correlation, and improves the session quality and user experience of the PDU sessions.

In a fourth aspect, an embodiment of the disclosure provides a method for processing a PDU session. The method is executed by a communication system, including: sending, by a UE, a second request message to a second core network function; sending, by the second core network function, a first request message to a first core network function, in which the first request message is configured to request activation or deactivation of at least one PDU session; and performing, by the first core network function, processing related to the activation or deactivation of the PDU session based on a group ID associated with the PDU session; in which the group ID indicates a group, and the group includes PDU sessions of at least one UE, or the group includes at least one UE.

In a fifth aspect, an embodiment of the disclosure provides a first core network function. The first core network function includes: a first transceiver module, configured to receive a first request message sent by a second core network function, in which the first request message is configured to request activation or deactivation of at least one PDU session; and a first processing module, configured to perform processing related to the activation or deactivation of the PDU session based on a group ID associated with the PDU session; in which the group ID indicates a group, and the group includes PDU sessions of at least one UE, or the group includes at least one UE.

In a sixth aspect, an embodiment of the disclosure provides a second core network function. The second core network function includes: a second transceiver module, configured to send a first request message to a first core network function, in which the first request message includes a group ID; the group ID indicates a group, and the group includes PDU sessions of at least one UE, or the group includes at least one UE; and the first request message is associated with activation or deactivation of the PDU session.

In a seventh aspect, an embodiment of the disclosure provides a core network device. The core network device includes: a second core network function, configured to send a first request message to a first core network function, in which the first request message includes a group ID; the group ID indicates a group, and the group includes PDU sessions of at least one UE, or the group includes at least one UE; and the first request message is associated with activation or deactivation of the PDU session; and a first core network function, configured to receive the first request message and perform processing related to the activation or deactivation of the PDU session based on the group ID.

In an eighth aspect, an embodiment of the disclosure provides a terminal. The terminal includes: a third transceiver module, configured to send a second request message to a second core network function, in which the second request message is configured to trigger the second core network function to send a first request message including a group ID to a first core network function, the group ID indicates a group, and the group includes PDU sessions of at least one UE, or the group includes at least one UE; and the first request message is associated with activation or deactivation of the PDU session.

In a ninth aspect, an embodiment of the disclosure provides the communication system. The communication system includes: a UE configured to perform the above method for processing a PDU session in the third aspect, a first core network function configured to perform the above method for processing a PDU session in the first aspect, and a second core network function configured to perform the above method for processing a PDU session in the second aspect.

In a tenth aspect, an embodiment of the disclosure provides a first core network function. The first core network function includes: one or more processors, in which the one or more processors are configured to call instructions to cause the first core network function to implement the above method for processing a PDU session in the first aspect.

In an eleventh aspect, an embodiment of the disclosure provides a second core network function. The second core network function includes: one or more processors, in which the one or more processors are configured to call instructions to cause the second core network function to implement the above method for processing a PDU session in the second aspect.

In a twelfth aspect, an embodiment of the disclosure provides a core network device. The core network device includes: one or more processors, in which the one or more processors are configured to call instructions to cause the core network device to implement the above method for processing a PDU session in the first aspect or the above method for processing a PDU session in the second aspect.

In a thirteenth aspect, an embodiment of the disclosure provides a UE. The UE includes: one or more processors, in which the one or more processors are configured to call instructions to cause the UE to implement the above method for processing a PDU session in the third aspect.

In a fourteenth aspect, an embodiment of the disclosure provides a storage medium. The storage medium stores instructions that, when executed on a communication device, cause the communication device to implement the methods for processing a PDU session in optional implementations of the first aspect, the second aspect, or the third aspect.

In a fifteenth aspect, an embodiment of the disclosure provides a program product. When the program product is executed by a communication device, the communication device is caused to implement the methods for processing a PDU session in optional implementations of the first aspect, the second aspect, or the third aspect.

In a sixteenth aspect, an embodiment of the disclosure provides a computer program. When the computer program is running on a computer, the computer is caused to implement the methods for processing a PDU session in optional implementations of the first aspect, the second aspect, or the third aspect.

It may be understood that the first core network function, the second core network function, the core network device, the UE, the communication system, the storage medium, the program product, and the computer program are all used to implement the method in embodiments of the disclosure. Thus, regarding beneficial effects they may achieve, reference may made be to the beneficial effects in the corresponding methods, which will not be repeated herein.

Embodiments of the disclosure provide a method and an apparatus for processing a PDU session, a communication device, a storage medium and a storage medium. In some embodiments, the terms such as "method for processing a PDU session", "method for information processing" and "method for information transmission" may be used interchangeably, the terms such as "apparatus for processing a PDU session", "apparatus for information processing", and "apparatus for information transmission" may be used interchangeably, and the terms such as "information processing system" and "communication system" may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined; in addition, respective embodiments may be arbitrarily combined, for example, some or all steps of different embodiments may be arbitrarily combined, and a certain embodiment may be arbitrarily combined with the optional implementations of other embodiments.

In various embodiments of the disclosure, unless otherwise specified or there is a logical conflict, the terms, and/or descriptions between embodiments are consistent and may be referred to each other, and the technical features in different embodiments may be combined to form a new embodiment based on their internal logical relationships.

The terms used in embodiments of the disclosure are only for the purpose of describing specific embodiments and are not intended to limit the disclosure.

In embodiments of the disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In embodiments disclosed herein, "a plurality of/multiple" means two or more.

In some embodiments, the terms "at least one of", "one or more", "a plurality of", "multiple" etc. may be used interchangeably.

In some embodiments, the descriptions such as "at least one of A, B", "A and/or B", "in one case, A; in another case, B", "one case, A; another case, B", etc. may include the following technical solutions according to situations: in some embodiments, A (A is executed independently of B); in some embodiments, B (B is executed independently of A): in some embodiments, one is selected from A and B to be executed (A and B are selectively executed): in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms such as "determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be replaced with each other.

In some embodiments, the apparatus, etc. may be interpreted as physical or virtual, and their names are not limited to the names used in embodiments. The terms such as "apparatus", "equipment", "device", "circuit", "network element", "node", "function", "unit", "section", "system", "network", "chip", "chip system", "entity", and "subject" may be used interchangeably.

In some embodiments, the term such as "network" may be interpreted as an apparatus (e.g., an access network device, a core network device, etc.) included in the network.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like may be used interchangeably.

In some embodiments, the terms such as "terminal", "terminal device", "UE", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, the access network device, the core network device, or the network device may be replaced as the terminal. For example, various embodiments of the disclosure may also be applied to a structure in which the communication between the access network device, the core network device, or the network device and the terminal is replaced as the communication between multiple terminals (for example, device-to-device (D2D), vehicle-to-everything (V2X), etc.). In this case, the terminal may be set to have a structure that has all or part of functions of the access network device. In addition, the language such as "uplink (UL)" and "downlink (DL)" may also be replaced as the language corresponding to the communication between the terminals (for example, "side"). For example, the UL channel, the DL channel, etc. may be replaced as the side channel, and the UL, the DL, etc. may be replaced as the side link (SL).

In some embodiments, the terminal may be replaced as the access network device, the core network device, or the network device. In this case, the access network device, the core network device, or the network device may also be configured to have a structure that has all or part of functions of the terminal.

In some embodiments, the acquisition of data, information, etc. may comply with the laws and regulations of the country where the data is obtained.

In some embodiments, data, information, etc. may be obtained with the consent from users.

In addition, each element, each row, or each column in the table of embodiments of the disclosure may be implemented as an independent embodiment, and the combination of any elements, any rows, or any columns may also be implemented as an independent embodiment.

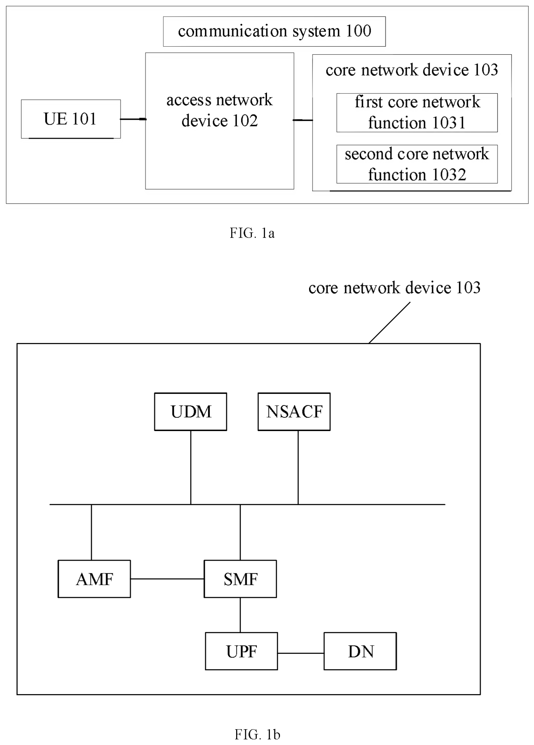

FIG. 1a is a schematic diagram illustrating an architecture of a communication system according to an embodiment of the disclosure.

As shown in FIG. 1a, the communication system 100 may include a UE 101, an access network device 102 and an access network device 103.

In some embodiments, the UE 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the access network device 102 may be, for example, a node or device that accesses a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, but is not limited herein.

In some embodiments, the technical solution of the disclosure may be applicable to an Open RAN architecture. In this case, the interfaces between or within the access network devices involved in embodiments of the disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, but is not limited herein.

In some embodiments, the core network device 103 may be a single device, including a first core network function 1031, a second core network function 1032, and the like; or the core network device 103 may be a plurality of devices or device groups, including the first core network function 1031 and the second core network function 1032, respectively. The core network function may be virtual or physical. The core network may include, for example, at least one of an evolved packet core (EPC), a 5G core network (5GCN), or a next generation core (NGC).

In some embodiments, the first core network function 1031 is, for example, an NSACF, which may be at least configured for admission control of PDU sessions using a network slice.

In some embodiments, the first core network function 1031 is configured for network slice admission control, such as PDU session activation, PDU session deactivation, and the like, and the name is not limited herein.

In some embodiments, the first core network function 1031 may be a network element independent of the core network device.

In some embodiments, the second core network function 1032 is, for example, a session management function (SMF).

In some embodiments, the second core network function 1032 is configured for PDU session management, for example, PDU session establishment, PDU session release, and the like, and the name is not limited herein.

In some embodiments, the second core network function 1032 may be a network element independent of the core network device.

As shown in FIG. 1b, the core network device 102 may include a plurality of function entities, for example, an access and mobility management function (AMF), an SMF, a NSACF, a user plane function (UPF), a data network (DN), a unified data management (UDM) function, and the like.

It may be understood that the communication system described in embodiments of the disclosure aims to more clearly illustrate the technical solution of embodiments of the disclosure, and does not constitute a limitation on the technical solution disclosed in embodiments of the disclosure. A person skilled in the art may know that with the evolution of the system architecture and the emergence of new service scenarios, the technical solution disclosed in embodiments of the disclosure are also applicable to similar technical problems.

The following embodiments of the disclosure may be applied to the communication system 100 or part of the subjects shown in FIG. 1a, but are not limited herein. The subjects shown in FIG. 1a are examples, and the communication system may include all or part of the subjects in FIG. 1a, or may include other subjects other than those shown in FIG. 1a. The number and form of the subjects are arbitrary. The connection relationships between the subjects are examples. The subjects may be connected or disconnected, and the connection may be in any manner, which may be a direct connection or an indirect connection, or may be a wired connection or a wireless connection.

Embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-Wideband (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the plurality of systems may also be combined (for example, a combination of LTE or LTE-A and 5G, etc.) for application.

In some embodiments, services such as mobile media services, cloud AR/VR and other XR services, cloud gaming, and video-based remote control of machines or drones are expected to contribute an increasingly high share of traffic to 5G networks. In addition to audio and video streams, the XR services also involve multimodal data streams, such as data streams for bio-haptic perception. The multimodal data describe data input from the same device or different devices (including sensors) for the same service or application, and the multimodal data may be output to one or more destination terminals. Each data stream within the multimodal data often exhibits a certain/even strong correlation, such as synchronization of audio and video streams, synchronization of haptic and visual feedback, and the like. The data streams of such media services, the relationships among the data streams, and the network transmission requirements for the service data streams all share some common characteristics. The effective identification and utilization of the common characteristics may be more helpful for the transmission and control of the network and services, as well as the service assurance and the user experience.

In some embodiments, the various data streams of the XR multimodal service have a strong correlation, and in many scenarios, the data streams of the service are distributed across a plurality of UEs. A network slice admission control (NSAC) function adopted in some embodiments cannot support the multi-UE group admission function of the XR multimodal service, for admission control on a number of activated sessions in the network. Consequently, admission control policies for the UEs related to the XR multimodal service are inconsistent, preventing the network from guaranteeing the user experience of the XR multimodal service, and even failing to provide a normal service in specific scenarios.

In some embodiments, the current network admission control employs a single-UE policy. The admission control policies for the UEs related to the XR multimodal service are inconsistent, preventing the network from guaranteeing the user experience of the XR multimodal service, and even failing to provide a normal service in specific scenarios. In some embodiments, how to effectively enhance the network slice admission control for PDU sessions of UEs related to the XR multimodal service, and achieve consistent admission control policies for PDU sessions of UEs related to the XR multimodal service, has become a problem to be solved by the disclosure.

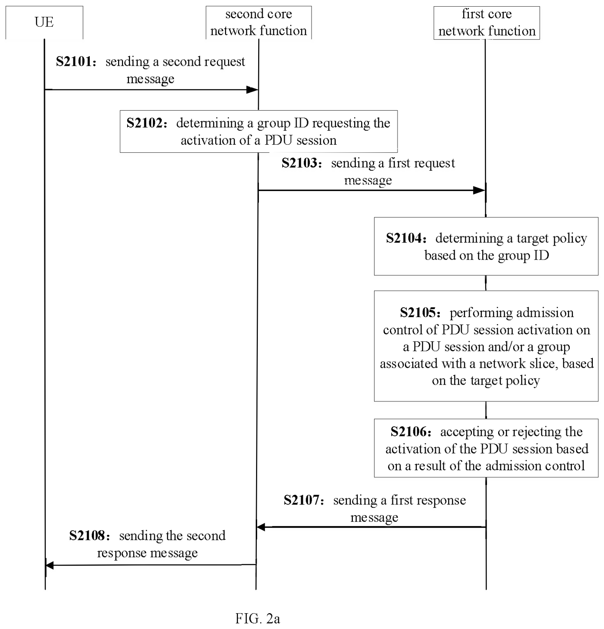

FIG. 2a is an interaction diagram illustrating a method for processing a PDU session according to an embodiment of the disclosure. As shown in FIG. 2a, embodiments of the disclosure relate to the method for processing a PDU session. The method is applied to a communication system 100 and includes the following steps S2101 to S2108.

At step S2101, a UE sends a second request message to a second core network function.

In some embodiments, the second request message requests activation of a PDU session

In some embodiments, the second core network function receives the second request message sent by the UE.

In some embodiments, the second core network function may be an SMF.

In some embodiments, the second request message may be a PDU session establishment request.

In some embodiments, the PDU session establishment request is configured to request establishment of a PDU session between the UE and a DN.

In some embodiments, the PDU session is a logical connection between the UE and a specified DN, providing a user plane connection from the UE to the DN.

In some embodiments, the PDU session establishment request may carry a session ID of the PDU session, a UE-ID, and/or a network slice ID, but is not limited herein.

In some embodiments, the second request message is configured to trigger the second core network function to send a first request message to a first core network function, and the first request message is associated with activation of the PDU session.

In some embodiments, the second request message includes: group-related information, and the group-related information is configured to determine the group ID of the UE requesting the PDU session activation.

It needs to be noted that the UE may send the group-related information to the second core network function, so that the second core network function may determine the group ID based on the group-related information.

In some embodiments, the group ID indicates a group; the group includes a plurality of PDU sessions of at least one UE; or the group includes at least one UE.

In this case, the group may be a PDU session group, involving PDU sessions of one or more UEs. Alternatively, the group may be a UE group, involving one or more UEs. It may be understood that each PDU session within a PDU session group has common characteristics, or each UE within a UE group has common characteristics.

In some embodiments, the group-related information includes at least one of: a group ID; an XR multimodal service capability supported by the UE; or a PEI of the UE.

It may be understood that the UE may directly send the group ID to the second core network function; or the UE may send the XR multimodal service capability supported by the UE and/or the PEI of the UE to the second core network function, which assists the second core network function to determine the group ID.

In summary, the group indicated by the group ID may involve one or more PDU sessions. In some embodiments, the group ID is associated with a plurality of correlated PDU sessions.

In some embodiments, the XR multimodal service capability supported by the UE indicates: whether the UE supports the XR multimodal service; and/or relevant service parameters of the XR multimodal service supported by the UE.

It may be understood that the XR multimodal service capabilities supported by the plurality of UEs associated with the same group are the same. The XR multimodal service capabilities supported by UEs corresponding to different groups may be different.

In some embodiments, the PEI is configured to uniquely indicate the UE.

At step S2102, the second core network function determines a group ID requesting the activation of the PDU session.

In some embodiments, the second core network function receives the second request message and determines the UE-ID.

In some embodiments, the second request message is configured to request activation or deactivation of the PDU session.

In some embodiments, the second core network determines the group ID based on the group-related information carried in the second request message.

In other embodiments, the second core network may independently determine the group ID requesting the PDU session activation.

In some embodiments, the second core network function may determine the group ID of the UE requesting the PDU session activation based on a first configuration.

It may be understood that the second request message may carry the UE-ID, and the second core network may determine the group ID associated with the UE-ID based on the first configuration.

In some embodiments, the first configuration may include a local configuration or an OAM configuration.

It should be noted that the local configuration may be a local configuration of the core network; the OAM configuration is a network configuration set by an operator network management system.

In some embodiments, the second core network function may determine the group ID requesting the activation or deactivation of the PDU session, based on subscription information of a UDM function.

In some embodiments, the UDM function is configured to handle user ID, access authentication, registration, or mobility management, and the like. It may be understood that the UDM function may store subscription information of each registered terminal.

The second core network function may send a subscription information query request to the UDM based on the UE-ID carried in the second request message, and determine the group ID based on the subscription information corresponding to the UE-ID returned by the UDM.

In some embodiments, the second core network function may determine the group ID requesting the activation or deactivation of the PDU session, based on the XR multimodal service capability supported by the UE.

The second core network function may determine, based on the UE-ID carried in the second request message, the XR multimodal service capability supported by the UE indicated by the UE-ID, and determine the group ID based on the XR multimodal service capability supported by the UE.

In some embodiments, the second core network function may determine the group ID requesting the activation or deactivation of the PDU session, based on the PEI of the UE.

In some embodiments, the second core network function determines the group ID requesting the activation or deactivation of the PDU session, based on UE XR multimodal information sent by an AMF.

The second core network function may obtain information related to the UE XR multimodal corresponding to the UE by sending a request to the AMF based on the UE-ID carried in the second request message; and determine the group ID based on the information related to the UE XR multimodal.

In some embodiments, the second request message is directly or indirectly from the UE.

In some embodiments, the second request message is configured to request establishment or release of the PDU session.

In some embodiments, the second request message includes: a PDU session establishment request; and/or a PDU session release request.

At step S2103, the second core network function sends the first request message to a first core network function.

In some embodiments, the first request message includes the group ID.

In some embodiments, the first core network function receives the first request message sent by the second core network function.

In some embodiments, the first core network function may be any admission control function that performs the activation or deactivation of the PDU session. For example, the first core network function may be an NSACF.

In some embodiments, the NSACF is: an NSACF in a single central architecture; an NSACF within a service area related to the second core network function in a non-hierarchical multi-NSACF architecture; or a local NSACF or a primary NSACF in a hierarchical multi-NSACF architecture.

The NSACF in the single central architecture may be a centrally integrated NSACF of a single PLMN.

The NSACF within the service area related to the second core network function in the non-hierarchical multi-NSACF architecture may be understood as a plurality of NSACFs that are set in parallel within one PLMN, in which the NSACFs are configured for the admission control of PDU sessions in different service areas.

The local NSACF in the hierarchical multi-NSACF architecture may be a lower-level NSACF or multi-level NSACFs of the primary NSACF.

In some embodiments, the first request message includes an update ID.

In some embodiments, the update ID is configured to request addition or deletion of an activated PDU session associated with the network slice.

In some embodiments, the update ID may include one or more indication bits. For example, different bit values of the indication bits indicate two states (i.e., an addition state, a deletion state).

In some embodiments, the second request message is the PDU session establishment request.

In some embodiments, the update ID carried in the first request message requests addition of the activated PDU session associated with the network slice.

In some embodiments, the first request message may not carry a dedicated update ID. Whether the first request message adds or deletes the activated PDU session associated with the network slice may be indirectly indicated by different message formats of the first request message or other multiplexed information.

In some embodiments, the first request message includes: slice ID information, configured to indicate the network slice associated with the PDU session requested to be activated.

In some embodiments, the slice ID information includes: a network slice ID, or a network slice ID list (S-NSSAI(s)).

In some embodiments, the first request message carries access type information, and the access type information indicates an access type of the PDU session.

In some embodiments, the access type may include: a 3rd generation partnership project (3GPP) access and/or a non-3GPP access.

It should be noted that the 3GPP access indicates an access method conforming to a 3GPP standard. For example, the 3GPP access may include: a universal mobile telecommunications system (UMTS) terrestrial radio access network (UTRAN) access, an evolved UMTS terrestrial radio access network (E-UTRAN) access, or a global system for mobile communication (GSM)/enhanced data rates for GSM evolution (EDGE) radio access network (GERAN) access, and the like.

The non-3GPP access indicates an access method not conforming to a 3GPP standard, such as a Wi-Fi access, a wired access, a code division multiple access (CDMA) access, and/or a Bluetooth access, and the like.

In some embodiments, the access type is configured to determine a number of PDU sessions allowed to be activated for the access type corresponding to the network slice.

In some embodiments, the method further includes: determining the number of PDU sessions allowed to be activated, based on the access type corresponding to the network slice.

In some embodiments, the first request message may include: a PDU session number update request; and/or a PDU session number availability check and update request.

In some embodiments, the PDU session number update request is configured to request updating a number of activated PDU sessions of the network slice.

In some embodiments, the PDU session number availability check and update request is configured to request checking of the number of activated PDU sessions of the network slice.

It may be understood that, if the availability check of the PDU session number indicates a successful availability check, it indicates that the number of activated PDU sessions of the network slice may be updated; if the availability check of the PDU session number indicates a failed availability check, it indicates that the number of activated PDU sessions of the network slice cannot be updated.

At step S2104, the first core network function determines a target policy based on the group ID.

In some embodiments, the first core network function may obtain the group ID from the first request message. It can be understood that the group ID may be carried within the first request message.

In other embodiments, the first core network function determines the group ID based on a first configuration and/or first information.

It needs to be noted that, in a case that the first request message does not carry the group ID, the first core network function may independently determine the group ID associated with the PDU session requested to be activated or deactivated, based on the first configuration and/or the first information.

In some embodiments, the first configuration includes at least one of: a local configuration; or an OAM configuration.

In some embodiments, the first information is provided by a PCF or an NEF.

In some embodiments, the first information may be the group ID. It should be noted that the PCF or the NEF may determine the group ID based on configuration information; or the PCF or the NEF may dynamically obtain a stored group ID.

It should be noted that the PCF supports a unified policy framework for managing network behavior and provides policy rules to network entities for enforcement.

In some embodiments, the target policy is a policy for performing processing related to the activation or deactivation of the PDU session.

In some embodiments, the target policies corresponding to different group IDs may be different.

In some embodiments, the target policy may include one of: a first policy, configured to reject or accept activation of each PDU session associated with the group ID; or a second policy, configured to reject activation of one or more PDU sessions associated with the group ID based on a priority.

It should be noted that, if the target policy corresponding to the group ID carried in the first request message is the first policy, the first core network function may perform the same processing on all PDU sessions associated with the group ID, thus reducing differences in processing the PDU sessions related to the same group ID by the first core network function. For example, the first core network function accepts activation of all PDU sessions associated with the group ID; or the first core network function rejects activation of all PDU sessions associated with the group ID.

For example, the first policy is applicable when the priorities and/or importance levels of a plurality of UEs associated with the group are similar. Alternatively, the first policy is applicable when the priorities and/or importance levels of a plurality of PDU sessions associated with the group are similar.

For another example, the second policy is applicable when the priorities and/or importance levels of a plurality of UEs associated with the group are different significantly. Alternatively, the second policy is applicable when the priorities and/or importance levels of a plurality of PDU sessions associated with the group are different significantly.

For another example, the second policy is applicable when the priorities and/or importance levels of UEs associated with different groups are different significantly. Alternatively, the second policy is applicable when the priorities and/or importance levels of PDU sessions associated with different groups are different significantly.

If the target policy corresponding to the group ID carried in the first request message is the second policy, the first core network function may reject the activation of one or more PDU sessions associated with the group ID based on a priority.

In some embodiments, the priority includes: a group priority and/or a PDU session priority.

It may be understood that the first core network function may, based on the group priority, accept activation of all PDU sessions associated with a group ID having a higher priority; and reject activation of all PDU sessions associated with a group ID having a lower priority.

In some embodiments, the first core network function may, based on the PDU session priority, accept activation of a part of the PDU sessions having higher priorities among the plurality of PDU sessions associated with the group ID; and reject activation of a part of the PDU sessions having lower priorities among the plurality of PDU sessions associated with the group ID.

At step S2105, the first core network function performs admission control of PDU session activation on a PDU session associated with a network slice and/or a group associated with a network slice, based on the target policy.

In some embodiments, for the update ID that requests addition of the activated PDU session associated with the network slice, the first core network function determines whether to activate the PDU session based on a number of PDU sessions activated by the network slice, a number of PDU sessions allowed to be activated by the network slice, and the target policy.

In this case, the number of PDU sessions allowed to be activated by the network slice is configured to determine a maximum number of PDU sessions that the network slice is capable of activating.

In some embodiments, it is determined whether the maximum number of PDU sessions that the network slice is capable of activating is reached based on the number of PDU sessions activated by the network slice and the number of PDU sessions allowed to be activated by the network slice.

It may be understood that, in a case that the number of PDU sessions activated by the network slice is less than the number of PDU sessions allowed to be activated by the network slice, it is determined that the maximum number of PDU sessions that the network slice is capable of activating is not reached; in a case that the number of PDU sessions activated by the network slice is greater than or equal to the number of PDU sessions allowed to be activated by the network slice, it is determined that the maximum number of PDU sessions that the network slice is capable of activating is reached.

When determining whether to activate the PDU session, the first core network function considers the target policy and whether the maximum number of PDU sessions that the network slice is capable of activating is reached. That is, in this case, the maximum number of groups that the network slice is capable of supporting and/or the number of registered groups are not considered.

In some embodiments, for the update ID that requests addition of the activated PDU session associated with the network slice, it is determined to accept or reject the activation of the PDU session, based on a number of groups involved in the PDU sessions activated by the network slice, a number of groups allowed by the network slice, the target policy, and whether the group ID is added to a first list.

In this case, the number of groups allowed by the network slice is configured to determine a maximum number of groups involved in the activated PDU sessions that the network slice is capable of supporting.

It needs to be noted that the first core network function may configure a group threshold for the network slice; and determine whether the group threshold of the network slice is reached based on the number of groups involved in the PDU sessions activated by the network slice and the number of groups allowed by the network slice.

In some embodiments, the first list includes a group ID associated with the activated PDU session.

Based on whether the group ID is added to the first list, it may be determined whether a group involved in the PDU session requested to be activated is the same as a group involved in the PDU sessions activated by the network slice.

It may be understood that, if the group ID is added to the first list, it indicates that the group involved in the PDU session requested to be activated is the same as the group involved in the PDU sessions activated by the network slice, that is, the PDU session requested to be activated and at least one PDU session activated by the network slice are PDU sessions of the same group. If the group ID is not added to the first list, it indicates that the group involved in the PDU session requested to be activated is different from the group involved in the PDU sessions activated by the network slice.

By determining whether the group ID is added to the first list, the first core network function determines whether activation of the PDU session requested by the first request message causes an update to the number of groups involved in the PDU sessions activated by the network slice.

It needs to be noted that, when determining whether to activate the PDU session, the first core network function may consider the target policy and whether the group threshold of the network slice is reached. That is, in this case, the maximum number of PDU sessions that the network slice is capable of supporting and/or the number of activated PDU sessions are not considered.

In some embodiments, for the update ID that requests addition of the activated PDU session associated with the network slice, it is determined to accept or reject the activation of the PDU session based on the number of groups involved in the PDU sessions activated by the network slice, the number of groups allowed by the network slice, the target policy, and whether the number of PDU sessions activated by the network slice is equal to the number of PDU sessions allowed to be activated by the network slice.

It may be understood that the first core network function may determine to accept or reject activation of the PDU session based on the target policy, whether the maximum number of PDU sessions that the network slice is capable of activating is reached, and whether the group threshold of the network slice is reached. That is, in this case, both the maximum number of PDU sessions that the network slice is capable of supporting and/or the number of activated PDU sessions, and the maximum number of groups that the network slice is capable of supporting and/or the number of registered groups are considered.

At step S2106, the activation of the PDU session is accepted or rejected based on a result of the admission control.

In some embodiments, for the update ID that requests addition of the activated PDU session associated with the network slice, determining whether to activate the PDU session based on the number of groups involved in PDU sessions activated by the network slice, the number of groups allowed by the network slice, and the target policy includes at least one of: in a case that the number of PDU sessions activated by the network slice is equal to or greater than the number of PDU sessions allowed to be activated by the network slice and the target policy is a first policy, determining to reject activation of each PDU session associated with the group ID; in a case that the number of PDU sessions activated by the network slice is less than the number of PDU sessions allowed to be activated by the network slice and the target policy is the first policy, determining to accept activation of the PDU session; in a case that the number of PDU sessions activated by the network slice is equal to the number of PDU sessions allowed to be activated by the network slice and the target policy is a second policy, determining to reject activation of each PDU session associated with the group ID; in a case that the number of PDU sessions activated by the network slice is less than the number of PDU sessions allowed to be activated by the network slice and the target policy is the second policy, and a number of PDU sessions to be activated is less than or equal to a number of PDU sessions that the network slice is further capable of activating, determining to accept activation of each PDU session associated with the group ID; or in a case that the number of PDU sessions activated by the network slice is less than the number of PDU sessions allowed to be activated by the network slice and the target policy is the second policy, and the number of PDU sessions to be activated is greater than the number of PDU sessions that the network slice is further capable of activating, determining to accept activation of a part of the PDU sessions to be activated and to reject activation of another part of the PDU sessions to be activated, based on a group priority of a group associated with the PDU sessions to be activated and/or a priority of the PDU sessions to be activated.

It should be noted that rejecting the activation of another part of the PDU sessions to be activated may be understood as rejecting the activation of other or remaining PDU sessions to be activated. It may also be understood that among the plurality of PDU sessions to be activated, except for the part of the PDU sessions to be activated whose activation is accepted, activation of other PDU sessions to be activated is rejected.

In this case, a group priority of a group associated with the part of the PDU sessions to be activated whose activation is accepted is higher than that of the another part of the PDU sessions to be activated whose activation is rejected, and/or a priority of the part of the PDU sessions to be activated whose activation is accepted is higher than that of the another part of the PDU sessions to be activated whose activation is rejected.

In some embodiments, the number of PDU sessions that the network slice is further capable of activating is a difference between the number of PDU sessions allowed to be activated by the network slice and the number of PDU sessions activated by the network slice.

It needs to be noted, in a case that the first core network function determines whether to activate the PDU session based on the target policy and whether the maximum number of PDU sessions that the network slice is capable of activating is reached (that is, in a case that the maximum number of groups that the network slice is capable of supporting and/or the number of registered groups are not considered), if the target policy is the first policy (i.e., performing the same processing on each PDU session associated with the group ID), whether to accept or reject the activation of each PDU session associated with the group ID may be determined based on whether the number of PDU sessions activated by the network slice is greater than or equal to the number of PDU sessions allowed to be activated by the network slice (that is, whether the maximum number of PDU sessions that the network slice is capable of activating is reached).

If the target policy is the second policy (i.e., rejecting the activation of one or more PDU sessions associated with the group ID based on the priority), whether to accept or reject the activation of one or more PDU sessions associated with the group ID may be determined based on whether the number of PDU sessions activated by the network slice is greater than or equal to the number of PDU sessions allowed to be activated by the network slice (that is, whether the maximum number of PDU sessions that the network slice is capable of activating is reached), and whether the number of PDU sessions to be activated is greater than the number of PDU sessions that the network slice is further capable of activating.

In a case that the number of PDU sessions activated by the network slice is greater than or equal to the number of PDU sessions allowed to be activated by the network slice (that is, the maximum number of PDU sessions that the network slice is capable of activating is reached), the first core network function may reject the activation of each PDU session associated with the group ID.

In a case that the number of PDU sessions activated by the network slice is less than the number of PDU sessions allowed to be activated by the network slice (that is, the maximum number of PDU sessions that the network slice is capable of activating is not reached), considering that the first request message received by the first core network may request activation of a multi-access PDU session, so the first core network further needs to determine whether the number of PDU sessions to be activated is greater than the number of PDU sessions that the network slice is further capable of activating, when determining whether to accept or reject the activation of the PDU session.

If the number of PDU sessions to be activated is less than or equal to the number of PDU sessions that the network slice is further capable of activating (even if the first core network function accepts the activation of the PDU sessions to be activated, the number of PDU sessions activated by the network slice does not exceed the number of PDU sessions allowed to be activated by the network slice), the first core network function determines to accept the activation of each PDU session associated with the group ID.

If the number of PDU sessions to be activated is greater than the number of PDU sessions that the network slice is further capable of activating (that is, if the first core network function accepts the activation of the PDU sessions to be activated, the number of PDU sessions activated by the network slice exceeds the number of PDU sessions allowed to be activated by the network slice), the first core network function may determine to accept the activation of a part of the PDU sessions to be activated and to reject the activation of another part of the PDU sessions to be activated, based on the group priority of the group associated with the PDU sessions to be activated and/or the priority of the PDU sessions to be activated.

In some embodiments, for the update ID that requests addition of the activated PDU session associated with the network slice, determining to accept or reject activation of the PDU session based on the number of groups involved in the PDU sessions activated by the network slice, the number of groups allowed by the network slice, the target policy, and whether the group ID is added to the first list includes at least one of: in a case that a number of groups associated with the PDU sessions activated by the network slice is less than the number of groups allowed by the network slice, the group ID is not added to the first list, and the target policy is a first policy, determining to accept activation of each PDU session associated with the same group ID; in a case that the number of groups associated with the PDU sessions activated by the network slice is equal to or greater than the number of groups allowed by the network slice, the group ID is not added to the first list, and the target policy is the first policy, determining to reject activation of each PDU session associated with the same group ID; in a case that the number of groups associated with the PDU sessions activated by the network slice is less than the number of groups allowed by the network slice, the group ID is added to the first list, and the target policy is the first policy, determining to accept activation of each PDU session associated with the same group ID; in a case that the number of groups associated with the PDU sessions activated by the network slice is equal to the number of groups allowed by the network slice, the group ID is added to the first list, and the target policy is the first policy, determining to accept activation of each PDU session associated with the same group ID; in a case that the number of groups associated with the PDU sessions activated by the network slice is less than the number of groups allowed by the network slice, the group ID is not added to the first list, and the target policy is a second policy, adding a group ID of a first priority to the first list, and determining to accept activation of a PDU session in a group of the first priority; in a case that the number of groups associated with the PDU sessions activated by the network slice is less than the number of groups allowed by the network slice, the group ID is not added to the first list, and the target policy is the second policy, adding a group ID of a second priority to the first list, and determining to reject activation of a PDU session in a group of the second priority, in which the second priority is lower than the first priority; in a case that the number of groups associated with the PDU sessions activated by the network slice is less than the number of groups allowed by the network slice, the group ID is added to the first list, and the target policy is the second policy, determining to accept activation of the PDU session; or in a case that the number of groups associated with the PDU sessions activated by the network slice is equal to the number of groups allowed by the network slice, the group ID is added to the first list, and the target policy is the second policy, determining to accept or reject activation of the PDU session, based on the number of PDU sessions allowed to be activated by the network slice and the number of PDU sessions activated by the network slice.

It needs to be noted, in a case that the first core network function determines whether to activate the PDU session in consideration of the target policy and whether the group threshold of the network slice is reached (that is, in a case that the maximum number of PDU sessions that the network slice is capable of supporting and/or the number of activated PDU sessions are not considered), if the target policy is a first policy and the group ID is added to the first list, regardless of whether the group threshold of the network slice is reached, the first core network function accepts the activation of each PDU session associated with the group ID.

It may be understood that, since the group ID has been added to the first list, even if the first core network function accepts the activation of each PDU session associated with the group ID, the number of groups involved in the PDU sessions activated by the network slice may not increase. Thus, in this case, regardless of whether the group threshold of the network slice is reached, the first core network function accepts the activation of each PDU session associated with the group ID.

If the target policy is the first policy, and the group ID is not added to the first list, whether to accept or reject the activation of each PDU session associated with the group ID may be determined based on whether the number of groups associated with the PDU sessions activated by the network slice is equal to or greater than the number of groups allowed by the network slice (that is, whether the group threshold of the network slice is reached).

If the target policy is the second policy (i.e., rejecting the activation of one or more PDU sessions associated with the group ID based on the priority), whether to accept or reject the activation of one or more PDU sessions associated with the group ID may be determined based on whether the group ID is added to the first list, and whether the number of groups associated with the PDU sessions activated by the network slice is equal to or greater than the number of groups allowed by the network slice.

In a case that the number of groups associated with the PDU sessions activated by the network slice is less than the number of groups allowed by the network slice (that is, the group threshold of the network slice is not reached), and the group ID is not added to the first list, the first core network function may accept or reject the activation of each PDU session associated with the group ID based on the group priority of the group associated with the group ID. It may be understood that, in this case, the first core network function determines to accept the activation of the PDU session in the group of the first priority (with a higher group priority), and to reject the activation of the PDU session in the group of the second priority (with a lower group priority).

In a case that the number of groups associated with the PDU sessions activated by the network slice is less than the number of groups allowed by the network slice (that is, the group threshold of the network slice is not reached), and the group ID is added to the first list, the first core network function may accept the activation of the PDU session.

In some embodiments, in the case that the number of groups associated with the PDU sessions activated by the network slice is equal to the number of groups allowed by the network slice, the group ID is added to the first list, and the target policy is the second policy, determining to accept or reject activation of the PDU session, based on the number of PDU sessions allowed to be activated by the network slice and the number of PDU sessions activated by the network slice includes at least one of: in a case that the number of groups associated with the PDU sessions activated by the network slice is equal to the number of groups allowed by the network slice, the group ID is added to the first list, the target policy is the second policy, and a number of PDU sessions to be activated is less than or equal to a number of PDU sessions that the network slice is further capable of activating, determining to accept activation of the PDU sessions to be activated; or in a case that the number of groups associated with the PDU sessions activated by the network slice is equal to the number of groups allowed by the network slice, the group ID is added to the first list, the target policy is the second policy, and the number of PDU sessions to be activated is greater than the number of PDU sessions that the network slice is further capable of activating, determining, based on the PDU session, to accept activation of a PDU session to be activated of a third priority and to reject activation of a PDU session to be activated of a fourth priority, in which the third priority is higher than the fourth priority, in which the number of PDU sessions that the network slice is further capable of activating is a difference between the number of PDU sessions allowed to be activated by the network slice and the number of PDU sessions activated by the network slice.

It needs to be noted, in the case that the number of groups associated with the PDU sessions activated by the network slice is equal to the number of groups allowed by the network slice (that is, the group threshold of the network slice is reached), and the group ID is added to the first list, if the target policy is the second policy, the first core network function needs to further determine whether the number of PDU sessions to be activated is greater than the number of PDU sessions that the network slice is further capable of activating. That is, in the case that the maximum number of groups that the network slice is capable of supporting is reached, and the activation of the PDU session does not affect the number of groups activated by the network slice, the activation of one or more PDU sessions associated with the group may be determined based on the number of PDU sessions that the network slice is further capable of activating and/or the number of PDU sessions to be activated.

If the number of PDU sessions to be activated is less than or equal to the number of PDU sessions that the network slice is further capable of activating, even if the first core network function accepts the activation of the PDU sessions to be activated, the number of PDU sessions activated by the network slice does not exceed the number of PDU sessions allowed to be activated by the network slice. In this case, the first core network function determines to accept the activation of the PDU sessions to be activated.

If the number of PDU sessions to be activated is greater than the number of PDU sessions that the network slice is further capable of activating (that is, if the first core network function accepts the activation of the PDU sessions to be activated, the number of PDU sessions activated by the network slice exceeds the number of PDU sessions allowed to be activated by the network slice), the first core network function may determine to accept the activation of the PDU session to be activated of the third priority (with a higher PDU session priority) and to reject the activation of the PDU session to be activated of the fourth priority (with a lower PDU session priority), based on the PDU session priority of the PDU sessions to be activated.

In some embodiments, for the update ID that requests addition of the activated PDU session associated with the network slice, determining to accept or reject activation of the PDU session based on the number of groups involved in the PDU sessions activated by the network slice, the number of groups allowed by the network slice, the target policy, and whether the number of PDU sessions activated by the network slice is equal to the number of PDU sessions allowed to be activated by the network slice includes at least one of: in a case that the number of groups associated with the PDU sessions activated by the network slice is equal to or greater than the number of groups allowed by the network slice, the group ID is not added to the first list, and the number of PDU sessions activated by the network slice is equal to or greater than the number of PDU sessions allowed to be activated by the network slice, determining to reject activation of the PDU sessions to be activated; in a case that the number of groups associated with the PDU sessions activated by the network slice is equal to or greater than the number of groups allowed by the network slice, the group ID is added to the first list, and the number of PDU sessions activated by the network slice is equal to or greater than the number of PDU sessions allowed to be activated by the network slice, determining to reject activation of the PDU sessions to be activated; in a case that the number of groups associated with the PDU sessions activated by the network slice is less than the number of groups allowed by the network slice, the group ID is not added to the first list, and the number of PDU sessions activated by the network slice is less than the number of PDU sessions allowed to be activated by the network slice, adding the group ID to the first list, and determining to accept activation of the PDU sessions to be activated; in a case that the number of groups associated with the PDU sessions activated by the network slice is less than the number of groups allowed by the network slice, the group ID is not added to the first list, the number of PDU sessions activated by the network slice is equal to or greater than the number of PDU sessions allowed to be activated by the network slice, and the target policy is a first policy, determining to reject each PDU session to be activated in the same group; or in a case that the number of groups associated with the PDU sessions activated by the network slice is less than the number of groups allowed by the network slice, the group ID is not added to the first list, the number of PDU sessions activated by the network slice is equal to or greater than the number of PDU sessions allowed to be activated by the network slice, and the target policy is a second policy, determining to accept activation of a part of the PDU sessions to be activated and to reject activation of another part of the PDU sessions to be activated, based on a group priority and/or a PDU session priority.

It needs to be noted, in the case that the first core network function determines whether to activate the PDU session based on the target policy, whether the group threshold of the network slice is reached, whether the maximum number of PDU sessions that the network slice is capable of activating is reached, and whether the group ID is added to the first list (that is, in the case that both the maximum number of PDU sessions that the network slice is capable of supporting and/or the number of activated PDU sessions, and the maximum number of groups that the network slice is capable of supporting and/or the number of registered groups are considered), if the number of groups associated with the PDU sessions activated by the network slice is equal to or greater than the number of groups allowed by the network slice, and the number of PDU sessions activated by the network slice is equal to or greater than the number of PDU sessions allowed to be activated by the network slice (that is, in the case that both the group threshold of the network slice and the maximum number of PDU sessions that the network slice is capable of activating are reached), regardless of whether the group ID is added to the first list, the first core network function rejects the activation of the PDU sessions to be activated.

In the case that the number of groups associated with the PDU sessions activated by the network slice is less than the number of groups allowed by the network slice, and the number of PDU sessions activated by the network slice is less than the number of PDU sessions allowed to be activated by the network slice (that is, in the case that both the group threshold of the network slice and the maximum number of PDU sessions that the network slice is capable of activating are not reached), if the group ID is not added to the first list, the first core network function accepts the activation of the PDU sessions to be activated.

In the case that the number of groups associated with the PDU sessions activated by the network slice is less than the number of groups allowed by the network slice, and the number of PDU sessions activated by the network slice is greater than or equal to the number of PDU sessions allowed to be activated by the network slice (that is, in the case that the group threshold of the network slice is not reached but the maximum number of PDU sessions that the network slice is capable of activating is reached), if the target policy is the first policy, the activation of each PDU session to be activated in the same group is rejected; if the target policy is the second policy, it is determined to accept the activation of the part of the PDU sessions to be activated and to reject the activation of another part of the PDU sessions to be activated, based on the group priority and/or the PDU session priority.

In some embodiments, in a case that the PDU session of one group ID involves a plurality of service areas, and there is at least one service area among the plurality of service areas in which a number of PDU sessions that a network slice is further capable of activating is greater than a number of PDU sessions to be activated associated with the group ID, the activation of the PDU sessions to be activated is determined to be accepted; and/or, in a case that the PDU session of one group ID involves the plurality of service areas, and there is no service area among the plurality of service areas in which the number of PDU sessions that the network slice is further capable of activating is greater than the number of PDU sessions to be activated associated with the group ID, the activation of the PDU sessions to be activated determined to be rejected, in which the number of PDU sessions that the network slice is further capable of activating is a difference between a number of PDU sessions allowed to be activated by the network slice and a number of PDU sessions activated by the network slice.

In some embodiments, the service area may be understood as different subnetworks of the PLMN, i.e., network areas corresponding to different administrative regions.

It needs to be noted, in the case that the PDU session associated with the group ID involves the plurality of service areas, whether to accept or reject the activation of the PDU session may be determined based on the maximum value of the number of PDU sessions allowed to be activated by the network slice within the plurality of service areas. It may be understood that the network slice within each service area has a quota for the number of PDU sessions allowed to be activated. Typically, the quota for the number of PDU sessions allowed to be activated by the network slice is less than the maximum number of PDU sessions supported by the network slice. Thus, in the case that the plurality of PDU sessions associated with the group involve the plurality of service areas, and there is at least one service area among the plurality of service areas where the network slice is further capable of supporting activation of the PDU sessions to be activated associated with the group, the activation of the PDU sessions to be activated associated with the group is accepted, reducing differences in processing the plurality of PDU sessions associated with the same group.

In some embodiments, in a case that the PDU session of one group ID involves a plurality of service areas, and there is at least one service area among the plurality of service areas where a number of groups that a network slice is further capable of activating is greater than the number of groups associated with a number of PDU sessions to be activated, the activation of the PDU sessions to be activated is determined to be accepted; and/or, in a case that the PDU session of one group ID involves the plurality of service areas, and there is no service area among the plurality of service areas where the number of groups that the network slice is further capable of activating is greater than the number of groups associated with a number of PDU sessions to be activated, the activation of the PDU sessions to be activated is determined to be rejected.

It needs to be noted, in the case that the PDU session associated with the group ID involves the plurality of service areas, whether to accept or reject activation of the PDU session may be determined based on the maximum number of groups allowed to be activated by the network slice within the plurality of service areas. It may be understood that the network slice within each service area has a quota for the number of groups involved in the PDU sessions allowed to be activated. Typically, the number of groups involved in the PDU sessions allowed to be activated by the network slice may be less than the maximum number of groups supported by the network slice. Thus, in the case that the plurality of PDU sessions associated with the group involve the plurality of service areas, and there is at least one service area among the plurality of service areas where the network slice is further capable of supporting activation of the number of PDU sessions to be activated associated with the group ID, the activation of the PDU sessions to be activated associated with the group is accepted, enabling the network slice to support more PDU sessions associated with different groups.

In some embodiments, the method further includes: in a case that the activation of the PDU session is accepted and the group ID is not added to a first list, adding the group ID to the first list, and associating a session ID of the activated PDU session with a corresponding group ID; or, in a case that the activation of the PDU session is accepted and the group ID is added to the first list, associating a session ID of the activated PDU session with a corresponding group ID.

It needs to be noted, after determining to accept the activation of the PDU session, the first core network function may perform different processing on the group ID and the session ID of the PDU session in the first request message based on whether the group ID is added to the first list.

If the group ID is not added to the first list, the group ID may be added to the first list, and the session ID of the activated PDU session is associated with the corresponding group ID. If the group ID is already added to the first list, there is no need for repeated addition, and the session ID of the activated PDU session may be directly associated with the corresponding group ID.

At step S2107, the first core network function sends a first response message to the second core network function.

In some embodiments, the second core network function receives the first response message sent by the first core network function.

In some embodiments, the first response message is a response message from the first core network function for the first request message.

In some embodiments, the first response message indicates accepting or rejecting the activation of the PDU session.

In some embodiments, if the first response message indicates accepting the activation of the PDU session, the second core network function establishes the PDU session associated with the network slice.

In some embodiments, the first response message may include: a PDU session number update response: and/or a PDU session number availability check and update response.

In some embodiments, in a case that the first core network function accepts the activation of the PDU session, the PDU session number update response indicates successful addition of the activated PDU session associated with the network slice; or, in a case that the first core network function rejects the activation of the PDU session, the PDU session number update response indicates rejection of adding the activated PDU session associated with the network slice.

In some embodiments, in a case that the first core network function accepts the activation of the PDU session, the PDU session number availability check and update response indicates a successful availability check, and the number of activated PDU sessions of the network slice is successfully updated; or, in a case that the first core network function rejects the activation of the PDU session, the PDU session number availability check and update response indicates a failed availability check, and rejects updating the number of activated PDU sessions of the network slice.

In some embodiments, the first response message indicates rejecting the activation of the PDU session, and the first response message includes at least one of: an indicator; the rejecting cause; the restricted access type; or the time information indicating a duration for which a UE suspends requesting PDU session activation.

The indicator indicates whether the activation of the PDU session is responded to or rejected.

For example, in the case that the number of PDU sessions activated by the network slice is equal to or greater than the number of PDU sessions allowed to be activated by the network slice and the target policy is the first policy, the first core network function determines to reject the activation of each PDU session associated with the group ID. The first core network function sets the rejecting cause to "the number of PDU sessions allowed to be activated by the network slice is reached", and sends the first response message carrying the rejecting cause to the second core network function.

In some embodiments, the rejecting cause is used by the second core network function to determine whether to restrict the admission control for the PDU sessions associated with the corresponding network slice.

For example, if the rejecting cause indicates that the number of PDU sessions allowed to be activated by the network slice is reached, the second core network function may restrict the admission control for PDU sessions associated with the network slice; subsequently, when receiving the second request message requesting activation of the PDU session associated with the network slice, the second core network function may directly return a second response message indicating the rejection of activation of the PDU session, without needing to send the first request message to the first core network function.

In some embodiments, the first core network function determines the restricted access type based on the number of PDU sessions allowed to be activated for each access type of the network slice and the number of PDU sessions activated for each access type of the network slice.

In some embodiments, the restricted access type indicates restricting the activation of the PDU session of the corresponding access type.

In some embodiments, the method further includes: restricting, by the second core network function, activation of a PDU session of the restricted access type; and/or restricting, by the second core network function, the UE from requesting the PDU session activation within the duration indicated by the time information.

At step S2108, the second core network function sends the second response message to the UE.

In some embodiments, the UE receives the second response message sent by the second core network function.

In some embodiments, the second response message indicates accepting or rejecting the activation of the PDU session.

In some embodiments, the second response message is a response message from the second core network function for the second request message.

In some embodiments, the second response message indicates rejecting the activation of the PDU session, and the second response message includes at least one of: the rejecting cause; the restricted access type; or the time information indicating a duration for which a UE suspends requesting PDU session activation.

In some embodiments, the terms such as "information", "message", "signal", "signaling", "report", "configuration", "indication", "instruction", "command", "channel", "parameter", "field", "data" may be used interchangeably.

In some embodiments, the terms such as "send", "emit", "report", "transmit" may be used interchangeably.

The method for processing a PDU session in embodiments of the disclosure may include at least one of the step S2101 to the step S2108. For example, the step S2101 combined with the step S2103 to the step S2108 may be implemented as an independent embodiment; the step S2101 combined with the step S2103 and the step S2105 to the step S2108 may be implemented as an independent embodiment, but is not limited herein.

In some embodiments, the step S2102 is optional, and one or more of the steps may be omitted or substituted in different embodiments. It may be understood that the UE may carry the group ID in the second request message, thus the second core network function does not need to determine the group ID requesting the PDU session activation.

In some embodiments, the steps S2102 and the S2104 are optional, and one or more of the steps may be omitted or substituted in different embodiments. It may be understood that the first core network function directly considers the group ID when performing the admission control, without needing to determine the target policy.

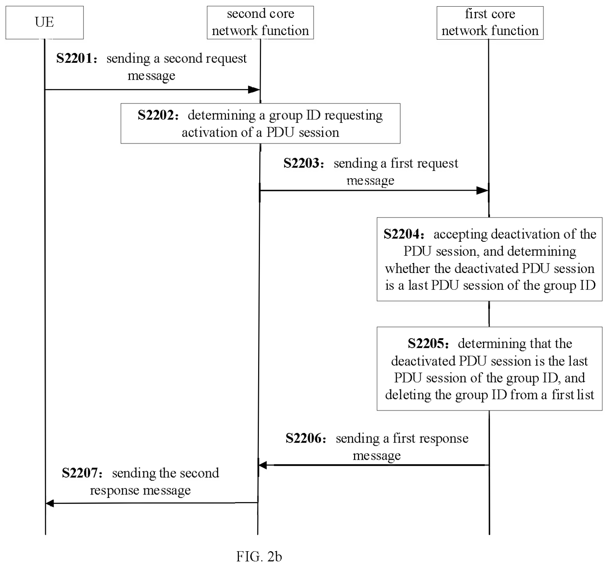

FIG. 2b is an interaction diagram illustrating a method for processing a PDU session according to an embodiment of the disclosure. As shown in FIG. 2b, embodiments of the disclosure relate to the method for processing a PDU session. The method is applied to a communication system 100 and includes the following steps S2201 to S2207.

At step S2201, a UE sends a second request message to a second core network function.

In some embodiments, for optional implementations of the step S2201, reference may be made to the optional implementations of the step S2101 in FIG. 2a and other related parts in embodiments associated with FIG. 2a, which is not repeated herein.

In some embodiments, the second request message requests deactivation of a PDU session

In some embodiments, the second request message may be a PDU session release request.

In some embodiments, the PDU session release request may carry a session ID of the PDU session, a UE-ID, and/or a network slice ID, but is not limited herein.

In some embodiments, the second request message is configured to trigger the second core network function to send a first request message to a first core network function, and the first request message is associated with deactivation of the PDU session.

At step S2202, the second core network function determines a group ID requesting the deactivation of the PDU session.

In some embodiments, for optional implementations of the step S2202, reference may be made to the optional implementations of the step S2102 in FIG. 2a and other related parts in embodiments associated with FIG. 2a, which is not repeated herein.

At step S2203, the second core network function sends the first request message to the first core network function.

In some embodiments, for optional implementations of the step S2203, reference may be made to the optional implementations of the step S2103 in FIG. 2a and other related parts in embodiments associated with FIG. 2a, which is not repeated herein.

In some embodiments, the second request message is the PDU session release request, and the update ID carried in the first request message requests deletion of the activated PDU session associated with the network slice.

In some embodiments, the first request message includes the group ID.

In some embodiments, the first core network function determines a target policy based on the group ID.

In some embodiments, the target policy may include one of: a first policy, configured to accept deactivation of each PDU session associated with the group ID; or a second policy, configured to accept deactivation of one or more PDU sessions associated with the group ID based on a priority.

In some embodiments, the priority includes: a group priority and/or a PDU session priority.

At step S2204, the first core network function accepts the deactivation of the PDU session, and determines whether the deactivated PDU session is a last PDU session of the group ID.

In some embodiments, for the update ID that requests deletion of the activated PDU session associated with the network slice, the first core network accepts the deactivation of the PDU session.

In some embodiments, for the update ID that requests deletion of the activated PDU session associated with the network slice, and the target policy is the first policy; the first core network function accepts the deactivation of each PDU session associated with the group ID.

In some embodiments, for the update ID that requests deletion of the activated PDU session associated with the network slice, and the target policy is the second policy; the deactivation of one or more PDU sessions associated with the group ID is accepted, based on a group priority of a group involved in the PDU session and/or a PDU session priority.

In some embodiments, the method further includes: accepting the deactivation of the PDU session, and canceling an association between a session ID of the deactivated PDU session and a corresponding group ID.

In some embodiments, the first core network function may determine a number of activated PDU sessions associated with the group ID, to determine whether the deactivated PDU session is the last PDU session of the group ID.

If the number of activated PDU sessions associated with the group ID is zero, it is determined that the deactivated PDU session is the last PDU session of the group ID. If the number of activated PDU sessions associated with the group ID is greater than zero, it is determined that the deactivated PDU session is not the last PDU session of the group ID.

At step S2205, the first core network function determines that the deactivated PDU session is the last PDU session of the group ID, and deletes the group ID from a first list.

In some embodiments, the first list includes a group ID associated with the activated PDU session,

It may be understood that, in a case that the deactivated PDU session is the last PDU session of the group ID, that is, all of the plurality of PDU sessions associated with the group ID are deactivated, then the group ID may be deleted from the first list.

At step S2206, the first core network function sends the first response message to the second core network function.

In some embodiments, for optional implementations of the step S2206, reference may be made to the optional implementations of the step S2106 in FIG. 2a and other related parts in embodiments associated with FIG. 2a, which is not repeated herein.

In some embodiments, the first response message indicates accepting or rejecting the deactivation of the PDU session.

At step S2207, the second core network function sends a second response message to the UE.

In some embodiments, for optional implementations of the step S2207, reference may be made to the optional implementations of the step S2107 in FIG. 2a and other related parts in embodiments associated with FIG. 2a, which is not repeated herein.

In some embodiments, the terms such as "information", "message", "signal", "signaling", "report", "configuration", "indication", "instruction", "command", "channel", "parameter", "field", "data" may be used interchangeably.

In some embodiments, the terms such as "send", "emit", "report", "transmit" may be used interchangeably.

The method for processing a PDU session in embodiments of the disclosure may include at least one of the step S2201 to the step S2207. For example, the step S2201 combined with the step S2203 to the step S2207 may be implemented as an independent embodiment, the step S2201 combined with the step S2203 or the step S2206 to the step S2207 may be implemented as an independent embodiment, but is not limited herein.

In some embodiments, the step S2202 is optional, and one or more of the steps may be omitted or substituted in different embodiments. It may be understood that the UE may carry the group ID in the second request message, thus the second core network function does not need to determine the group ID requesting the PDU session deactivation.

In some embodiments, the steps S2204 and the S2205 are optional, and one or more of the steps may be omitted or substituted in different embodiments. It may be understood that, when performing the deactivation of the PDU session, the first core network function may directly deactivate all PDU sessions associated with the group ID and delete the group ID from the first list, without needing to determine whether the deactivated PDU session is the last PDU session of the group ID.

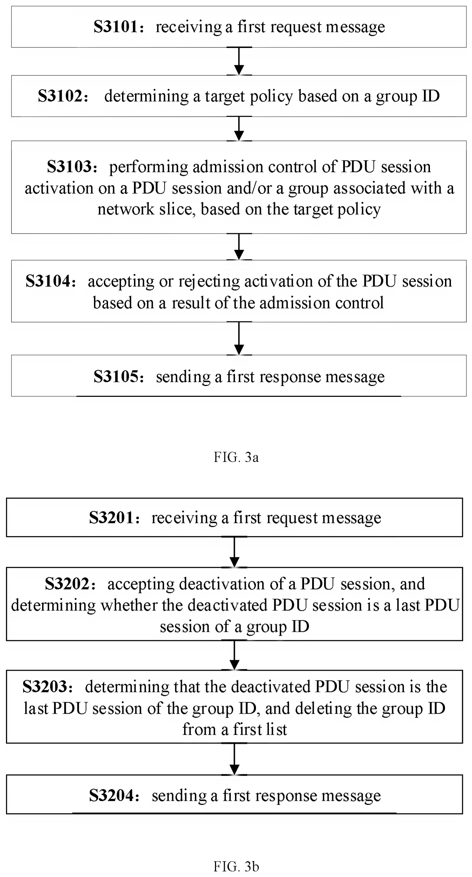

FIG. 3a is a flowchart illustrating a method for processing a PDU session according to an embodiment of the disclosure. As shown in FIG. 3a, embodiments of the disclosure relate to the method for processing a PDU session. The method is performed by a first core network function 1031 and includes the following steps S3101 to S3105.

At step S3101, a first request message is received.

In some embodiments, for optional implementations of the step S3101, reference may be made to the optional implementations of the step S2103 in FIG. 2a and other related parts in embodiments associated with FIG. 2a, which is not repeated herein.

In some embodiments, the first core network function receives the first request message sent by a second core network function.

At step S3102, a target policy is determined based on a group ID.

In some embodiments, for optional implementations of the step S3102, reference may be made to the optional implementations of the step S2104 in FIG. 2a and other related parts in embodiments associated with FIG. 2a, which is not repeated herein.

At step S3103, admission control of PDU session activation is performed on a PDU session associated with a network slice and/or a group associated with a network slice, based on the target policy.

In some embodiments, for optional implementations of the step S3103, reference may be made to the optional implementations of the step S2105 in FIG. 2a and other related parts in embodiments associated with FIG. 2a, which is not repeated herein.

At step S3104, the activation of the PDU session is accepted or rejected based on a result of the admission control.

In some embodiments, for optional implementations of the step S3104, reference may be made to the optional implementations of the step S2106 in FIG. 2a and other related parts in embodiments associated with FIG. 2a, which is not repeated herein.

At step S3105, a first response message is sent.

In some embodiments, for optional implementations of the step S3105, reference may be made to the optional implementations of the step S2107 in FIG. 2a and other related parts in embodiments associated with FIG. 2a, which is not repeated herein.

In some embodiments, the first core network function sends the first response message to the second core network function.

The method for processing a PDU session in embodiments of the disclosure may include at least one of the step S3101 to the step S3105. For example, the step S3101 combined with the step S3103 to the step S3105 may be implemented as an independent embodiment, but is not limited herein.

In some embodiments, the step S3102 is optional, and one or more of the steps may be omitted or substituted in different embodiments. The first core network function directly considers the group ID when performing the admission control, without needing to determine the target policy.

FIG. 3b is a flowchart illustrating a method for processing a PDU session according to an embodiment of the disclosure. As shown in FIG. 3b, embodiments of the disclosure relate to the method for processing a PDU session. The method is performed by a first core network function 1031 and includes the following steps S3201 to S3204.

At step S3201, a first request message is received.

In some embodiments, for optional implementations of the step S3201, reference may be made to the optional implementations of the step S2203 in FIG. 2b and other related parts in embodiments associated with FIG. 2b, which is not repeated herein.

In some embodiments, the first core network function receives the first request message sent by a second core network function.

At step S3202, deactivation of a PDU session is accepted, and it is determined whether the deactivated PDU session is a last PDU session of a group ID.

In some embodiments, for optional implementations of the step S3202, reference may be made to the optional implementations of the step S2204 in FIG. 2b and other related parts in embodiments associated with FIG. 2b, which is not repeated herein.

At step S3203, it is determined that the deactivated PDU session is the last PDU session of the group ID, and the group ID is deleted from a first list.

In some embodiments, for optional implementations of the step S3203, reference may be made to the optional implementations of the step S2205 in FIG. 2b and other related parts in embodiments associated with FIG. 2b, which is not repeated herein.

At step S3204, a first response message is sent.

In some embodiments, for optional implementations of the step S3204, reference may be made to the optional implementations of the step S2206 in FIG. 2b and other related parts in embodiments associated with FIG. 2b, which is not repeated herein.

In some embodiments, the first core network function sends the first response message to the second core network function.

The method for processing a PDU session in embodiments of the disclosure may include at least one of the step S3201 to the step S3204. For example, the step S3201 combined with the step S3203 to the step S3204 may be implemented as an independent embodiment; the step S3201 combined with the step S3204 may be implemented as an independent embodiment, but is not limited herein.

In some embodiments, the steps S3202 and S3203 are optional, and one or more of the steps may be omitted or substituted in different embodiments. It may be understood that, when performing the deactivation of the PDU session, the first core network function may directly deactivate all PDU sessions associated with the group ID and delete the group ID from the first list, without needing to determine whether the deactivated PDU session is the last PDU session of the group ID.

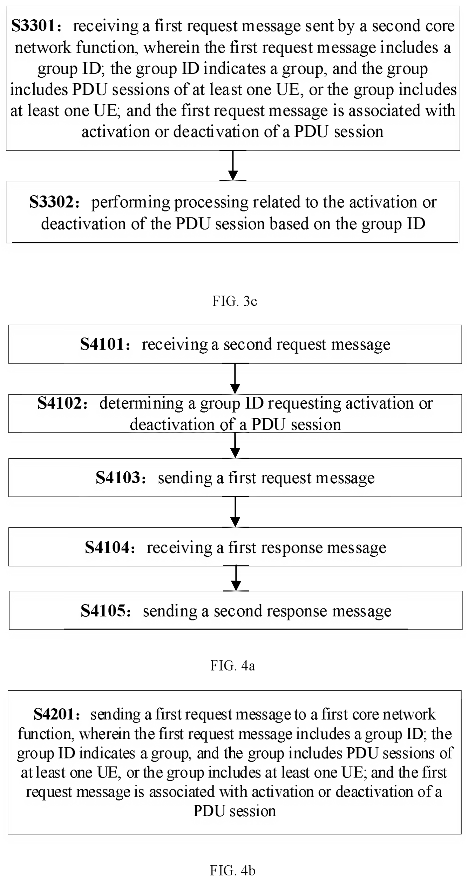

FIG. 3c is a flowchart illustrating a method for processing a PDU session according to an embodiment of the disclosure. As shown in FIG. 3c, embodiments of the disclosure relate to the method for processing a PDU session. The method is performed by a first core network function 1031 and includes the following steps S3301 to S3302.

At step S3301, a first request message sent by a second core network function is received, in which the first request message includes a group ID; the group ID indicates a group, and the group includes PDU sessions of at least one UE, or the group includes at least one UE; and the first request message is associated with activation or deactivation of the PDU session.

At step S3302, processing related to the activation or deactivation of the PDU session is performed based on the group ID.

In some embodiments, performing the processing related to the activation or deactivation of the PDU session based on the group ID includes: determining a target policy based on the group ID; and performing the processing related to the activation or deactivation of the PDU session based on the target policy.

In some embodiments, performing the processing related to the activation or deactivation of the PDU session based on the target policy includes at least one of: for the target policy being a first policy, rejecting or accepting activation of each PDU session associated with the group ID; for the target policy being a first policy, accepting deactivation of each PDU session associated with the group ID; for the target policy being a second policy, rejecting activation of one or more PDU sessions associated with the group ID based on a priority; or for the target policy being a second policy, accepting deactivation of one or more PDU sessions associated with the group ID based on a priority.

In some embodiments, the priority includes: a group priority and/or a PDU session priority.

In some embodiments, performing the processing related to the activation or deactivation of the PDU session based on the target policy includes: performing admission control of PDU session activation on a PDU session associated with a network slice and/or a group associated with a network slice, based on the target policy; and accepting or rejecting the activation of the PDU session based on a result of the admission control.

In some embodiments, the first request message includes: an update ID, in which the update ID is configured to request addition or deletion of an activated PDU session associated with the network slice.

In some embodiments, performing the admission control of the PDU session activation on the PDU session associated with the network slice and/or the group associated with the network slice based on the target policy includes: for the update ID that requests addition of the activated PDU session associated with the network slice, determining whether to activate the PDU session based on a number of PDU sessions activated by the network slice, a number of PDU sessions allowed to be activated by the network slice, and the target policy; and/or, for the update ID that requests addition of the activated PDU session associated with the network slice, determining whether to activate the PDU session based on a number of groups involved in PDU sessions activated by the network slice, a number of groups allowed by the network slice, and the target policy.

In some embodiments, determining whether to activate the PDU session based on the number of PDU sessions activated by the network slice, the number of PDU sessions allowed to be activated by the network slice, and the target policy includes at least one of: in a case that the number of PDU sessions activated by the network slice is equal to or greater than the number of PDU sessions allowed to be activated by the network slice and the target policy is a first policy, determining to reject activation of each PDU session associated with the group ID; in a case that the number of PDU sessions activated by the network slice is less than the number of PDU sessions allowed to be activated by the network slice and the target policy is the first policy, determining to accept activation of the PDU session; in a case that the number of PDU sessions activated by the network slice is equal to the number of PDU sessions allowed to be activated by the network slice and the target policy is a second policy, determining to reject activation of each PDU session associated with the group ID; in a case that the number of PDU sessions activated by the network slice is less than the number of PDU sessions allowed to be activated by the network slice and the target policy is the second policy, and a number of PDU sessions to be activated is less than or equal to a number of PDU sessions that the network slice is further capable of activating, determining to accept activation of each PDU session associated with the group ID; or in a case that the number of PDU sessions activated by the network slice is less than the number of PDU sessions allowed to be activated by the network slice and the target policy is the second policy, and the number of PDU sessions to be activated is greater than the number of PDU sessions that the network slice is further capable of activating, determining to accept activation of a part of the PDU sessions to be activated and to reject activation of another part of the PDU sessions to be activated, based on a group priority of a group associated with the PDU sessions to be activated and/or a priority of the PDU sessions to be activated, in which the number of PDU sessions that the network slice is further capable of activating is a difference between the number of PDU sessions allowed to be activated by the network slice and the number of PDU sessions activated by the network slice.

In some embodiments, the method further includes: in a case that the activation of the PDU session is accepted and the group ID is not added to a first list, adding the group ID to the first list, and associating a session ID of the activated PDU session with a corresponding group ID, in which the first list includes a group ID associated with the activated PDU session; or, in a case that the activation of the PDU session is accepted and the group ID is added to the first list, associating a session ID of the activated PDU session with a corresponding group ID.

In some embodiments, for the update ID that requests addition of the activated PDU session associated with the network slice, determining whether to activate the PDU session based on the number of groups involved in the PDU sessions activated by the network slice, the number of groups allowed by the network slice, and the target policy includes: for the update ID that requests addition of the activated PDU session associated with the network slice, determining to accept or reject activation of the PDU session based on the number of groups involved in the PDU sessions activated by the network slice, the number of groups allowed by the network slice, the target policy, and whether the group ID is added to a first list, in which the first list includes a group ID associated with the activated PDU session; and/or, for the update ID that requests addition of the activated PDU session associated with the network slice, determining to accept or reject activation of the PDU session based on the number of groups involved in the PDU sessions activated by the network slice, the number of groups allowed by the network slice, the target policy, and whether the number of PDU sessions activated by the network slice is equal to the number of PDU sessions allowed to be activated by the network slice.

In some embodiments, for the update ID that requests addition of the activated PDU session associated with the network slice, determining to accept or reject activation of the PDU session based on the number of groups involved in the PDU sessions activated by the network slice, the number of groups allowed by the network slice, the target policy, and whether the group ID is added to the first list includes at least one of: in a case that a number of groups associated with the PDU sessions activated by the network slice is less than the number of groups allowed by the network slice, the group ID is not added to the first list, and the target policy is a first policy, determining to accept activation of each PDU session associated with the same group ID; in a case that the number of groups associated with the PDU sessions activated by the network slice is equal to or greater than the number of groups allowed by the network slice, the group ID is not added to the first list, and the target policy is the first policy, determining to reject activation of each PDU session associated with the same group ID; in a case that the number of groups associated with the PDU sessions activated by the network slice is less than the number of groups allowed by the network slice, the group ID is added to the first list, and the target policy is the first policy, determining to accept activation of each PDU session associated with the same group ID; in a case that the number of groups associated with the PDU sessions activated by the network slice is equal to the number of groups allowed by the network slice, the group ID is added to the first list, and the target policy is the first policy, determining to accept activation of each PDU session associated with the same group ID; in a case that the number of groups associated with the PDU sessions activated by the network slice is less than the number of groups allowed by the network slice, the group ID is not added to the first list, and the target policy is a second policy, adding a group ID of a first priority to the first list, and determining to accept activation of a PDU session in a group of the first priority; in a case that the number of groups associated with the PDU sessions activated by the network slice is less than the number of groups allowed by the network slice, the group ID is not added to the first list, and the target policy is the second policy, adding a group ID of a second priority to the first list, and determining to reject activation of a PDU session in a group of the second priority, in which the second priority is lower than the first priority; in a case that the number of groups associated with the PDU sessions activated by the network slice is less than the number of groups allowed by the network slice, the group ID is added to the first list, and the target policy is the second policy, determining to accept activation of the PDU session; or in a case that the number of groups associated with the PDU sessions activated by the network slice is equal to the number of groups allowed by the network slice, the group ID is added to the first list, and the target policy is the second policy, determining to accept or reject activation of the PDU session, based on the number of PDU sessions allowed to be activated by the network slice and the number of PDU sessions activated by the network slice.

In some embodiments, in the case that the number of groups associated with the PDU sessions activated by the network slice is equal to the number of groups allowed by the network slice, the group ID is added to the first list, and the target policy is the second policy, determining to accept or reject activation of the PDU session, based on the number of PDU sessions allowed to be activated by the network slice and the number of PDU sessions activated by the network slice includes at least one of: in a case that the number of groups associated with the PDU sessions activated by the network slice is equal to the number of groups allowed by the network slice, the group ID is added to the first list, the target policy is the second policy, and a number of PDU sessions to be activated is less than or equal to a number of PDU sessions that the network slice is further capable of activating, determining to accept activation of the PDU sessions to be activated; or in a case that the number of groups associated with the PDU sessions activated by the network slice is equal to the number of groups allowed by the network slice, the group ID is added to the first list, the target policy is the second policy, and the number of PDU sessions to be activated is greater than the number of PDU sessions that the network slice is further capable of activating, determining, based on the PDU session, to accept activation of a PDU session to be activated of a third priority and to reject activation of a PDU session to be activated of a fourth priority, in which the third priority is higher than the fourth priority; in which the number of PDU sessions that the network slice is further capable of activating is a difference between the number of PDU sessions allowed to be activated by the network slice and the number of PDU sessions activated by the network slice.

In some embodiments, for the update ID that requests addition of the activated PDU session associated with the network slice, determining to accept or reject activation of the PDU session based on the number of groups involved in the PDU sessions activated by the network slice, the number of groups allowed by the network slice, the target policy, and whether the number of PDU sessions activated by the network slice is equal to the number of PDU sessions allowed to be activated by the network slice includes at least one of: in a case that the number of groups associated with the PDU sessions activated by the network slice is equal to or greater than the number of groups allowed by the network slice, the group ID is not added to the first list, and the number of PDU sessions activated by the network slice is equal to or greater than the number of PDU sessions allowed to be activated by the network slice, determining to reject activation of the PDU sessions to be activated; in a case that the number of groups associated with the PDU sessions activated by the network slice is equal to or greater than the number of groups allowed by the network slice, the group ID is added to the first list, and the number of PDU sessions activated by the network slice is equal to or greater than the number of PDU sessions allowed to be activated by the network slice, determining to reject activation of the PDU sessions to be activated; in a case that the number of groups associated with the PDU sessions activated by the network slice is less than the number of groups allowed by the network slice, the group ID is not added to the first list, and the number of PDU sessions activated by the network slice is less than the number of PDU sessions allowed to be activated by the network slice, adding the group ID to the first list, and determining to accept activation of the PDU sessions to be activated; in a case that the number of groups associated with the PDU sessions activated by the network slice is less than the number of groups allowed by the network slice, the group ID is not added to the first list, the number of PDU sessions activated by the network slice is equal to or greater than the number of PDU sessions allowed to be activated by the network slice, and the target policy is a first policy, determining to reject each PDU session to be activated in the same group; or in a case that the number of groups associated with the PDU sessions activated by the network slice is less than the number of groups allowed by the network slice, the group ID is not added to the first list, the number of PDU sessions activated by the network slice is equal to or greater than the number of PDU sessions allowed to be activated by the network slice, and the target policy is a second policy, determining to accept activation of a part of the PDU sessions to be activated and to reject activation of another part of the PDU sessions to be activated, based on a group priority and/or a PDU session priority, in which the first list includes a group ID associated with the PDU session activated by the network slice.

In some embodiments, performing the processing related to the activation or deactivation of the PDU session based on the group ID includes at least one of: in a case that the PDU session of one group ID involves a plurality of service areas, and there is at least one service area among the plurality of service areas in which a number of PDU sessions that a network slice is further capable of activating is greater than a number of PDU sessions to be activated associated with the group ID, determining to accept activation of the PDU sessions to be activated; or in a case that the PDU session of one group ID involves the plurality of service areas, and there is no service area among the plurality of service areas in which the number of PDU sessions that the network slice is further capable of activating is greater than the number of PDU sessions to be activated associated with the group ID, determining to reject activation of the PDU sessions to be activated, in which the number of PDU sessions that the network slice is further capable of activating is a difference between a number of PDU sessions allowed to be activated by the network slice and a number of PDU sessions activated by the network slice.

In some embodiments, performing the processing related to the activation or deactivation of the PDU session based on the group ID includes: for the update ID that requests deletion of the activated PDU session associated with the network slice, deactivating the PDU session.

In some embodiments, the method further includes: in a case that a last PDU session of one group ID is deactivated, deleting the group ID from a first list, in which the first list includes a group ID of an activated PDU session.

In some embodiments, the first request message includes: a PDU session number update request; and/or a PDU session number availability check and update request.

In some embodiments, the first request message carries access type information, the access type information indicates an access type of the PDU session; and the method further includes: determining the number of PDU sessions allowed to be activated, based on an access type corresponding to the network slice.

In some embodiments, the method further includes: sending a first response message to the second core network function, in which the first response message is configured to trigger the second core network function to establish or release the PDU session.

In some embodiments, the first response message indicates accepting or rejecting the activation of the PDU session.

In some embodiments, the first response message indicates rejecting the activation of the PDU session, and the first response message includes at least one of: a rejecting cause; a restricted access type; or time information indicating a duration for which a UE suspends requesting PDU session activation.

In some embodiments, the first core network function is an NSACF.

In some embodiments, the NSACF is: an NSACF in a single central architecture; an NSACF within a service area related to the second core network function in a non-hierarchical multi-NSACF architecture; or a local NSACF or a primary NSACF in a hierarchical multi-NSACF architecture.

FIG. 4a is a flowchart illustrating a method for processing a PDU session according to an embodiment of the disclosure. As shown in FIG. 4a, embodiments of the disclosure relate to the method for processing a PDU session. The method is performed by a second core network function 1032 and includes the following steps S4101 to S4105.

At step S4101, a second request message is received.

In some embodiments, for optional implementations of the step S4101, reference may be made to the optional implementations of the step S2101 in FIG. 2a and other related parts in embodiments associated with FIG. 2a, which is not repeated herein.

In some embodiments, for optional implementations of the step S4101, reference may be made to the optional implementations of the step S2201 in FIG. 2b and other related parts in embodiments associated with FIG. 2b, which is not repeated herein.

In some embodiments, the second core network function receives the second request message sent by a UE.

In some embodiments, the second request message is configured to request activation or deactivation of a PDU session.

At step S4102, a group ID requesting the activation or deactivation of the PDU session is determined.

In some embodiments, for optional implementations of the step S4102, reference may be made to the optional implementations of the step S2102 in FIG. 2a and other related parts in embodiments associated with FIG. 2a, which is not repeated herein.

At step S4103, a first request message is sent.

In some embodiments, for optional implementations of the step S4103, reference may be made to the optional implementations of the step S2103 in FIG. 2a and other related parts in embodiments associated with FIG. 2a, which is not repeated herein.

In some embodiments, the second core network function sends the first request message to a first core network function.

In some embodiments, the first request message includes: an update ID, in which the update ID is configured to request addition or deletion of an activated PDU session associated with the network slice.

In some embodiments, for the second request message that requests the activation of the PDU session, the update ID requests addition of the activated PDU session associated with the network slice.

In some embodiments, for the second request message that requests the deactivation of the PDU session, the update ID requests deletion of the activated PDU session associated with the network slice.

At step S4104, a first response message is received.

In some embodiments, for optional implementations of the step S4104, reference may be made to the optional implementations of the step S2107 in FIG. 2a and other related parts in embodiments associated with FIG. 2a, which is not repeated herein.

In some embodiments, the second core network function receives the first response message sent by the first core network function.

At step S4105, a second response message is sent.

In some embodiments, for optional implementations of the step S4105, reference may be made to the optional implementations of the step S2108 in FIG. 2a and other related parts in embodiments associated with FIG. 2a, which is not repeated herein.

In some embodiments, the second core network function sends the second response message to the UE.

The method for processing a PDU session in embodiments of the disclosure may include at least one of the step S4101 to the step S4105. For example, the step S4101 combined with the step S4103 to the step S4105 may be implemented as an independent embodiment, but is not limited herein.

In some embodiments, the step S4102 is optional, and one or more of the steps may be omitted or substituted in different embodiments. It may be understood that the UE may carry the group ID in the second request message, thus the second core network function does not need to determine the group ID requesting the PDU session deactivation.

FIG. 4b is a flowchart illustrating a method for processing a PDU session according to an embodiment of the disclosure. As shown in FIG. 4b, embodiments of the disclosure relate to the method for processing a PDU session. The method is performed by a second core network function 1032 and includes the following step S4201.

At step S4201, a first request message is sent to a first core network function, in which the first request message includes a group ID; the group ID indicates a group, and the group includes PDU sessions of at least one UE, or the group includes at least one UE; and the first request message is associated with activation or deactivation of the PDU session.

In some embodiments, the method further includes: determining a group ID requesting the activation or deactivation of the PDU session.

In some embodiments, determining the group ID requesting the activation or deactivation of the PDU session includes at least one of: determining the group ID requesting the activation or deactivation of the PDU session, based on a first configuration; determining the group ID requesting the activation or deactivation of the PDU session, based on subscription information of a UDM function; determining the group ID requesting the activation or deactivation of the PDU session, based on an XR multimodal service capability supported by the UE; determining the group ID requesting the activation or deactivation of the PDU session, based on a PEI of the UE; or determining the group ID requesting the activation or deactivation of the PDU session, based on UE XR multimodal information sent by an AMF.

In some embodiments, the first configuration includes at least one of: a local configuration; or an OAM configuration.

In some embodiments, the group ID is used by the first core network function to determine a target policy, and the target policy is configured to perform processing related to the activation or deactivation of the PDU session.

In some embodiments, the target policy includes at least one of: a first policy, configured to reject or accept activation of each PDU session associated with the group ID; a first policy, configured to reject deactivation of each PDU session associated with the group ID; a second policy; configured to reject activation of one or more PDU sessions associated with the group ID based on a priority; or a second policy, configured to accept deactivation of one or more PDU sessions associated with the group ID based on a priority.

In some embodiments, the priority includes: a group priority and/or a PDU session priority.

In some embodiments, the first request message is configured to trigger the first core network function to perform admission control of PDU session activation on a PDU session associated with a network slice and/or a group associated with a network slice, based on the target policy; and a result of the admission control is configured to determine to accept or reject the activation of the PDU session

In some embodiments, sending, by the second core network function, the first request message includes: receiving a second request message, and sending, by the second core network function, the first request message.

In some embodiments, the first request message includes: an update ID, in which the update ID is configured to request addition or deletion of an activated PDU session associated with the network slice.

In some embodiments, the second request message is a PDU session establishment request, and the update ID requests addition of the activated PDU session associated with the network slice; and/or the second request message is a PDU session release request, and the update ID requests deletion of the activated PDU session associated with the network slice.

In some embodiments, the first request message carries access type information, the access type information indicates an access type of the PDU session; and the method further includes: determining the number of PDU sessions allowed to be activated, based on an access type corresponding to the network slice.

In some embodiments, the method further includes: receiving a first response message; and establishing or releasing the PDU session based on the first response message.

In some embodiments, the first response message indicates accepting or rejecting the activation of the PDU session.

In some embodiments, the first response message indicates rejecting the activation of the PDU session, and the first response message includes at least one of: a rejecting cause; a restricted access type; or time information indicating a duration for which a UE suspends requesting PDU session activation.

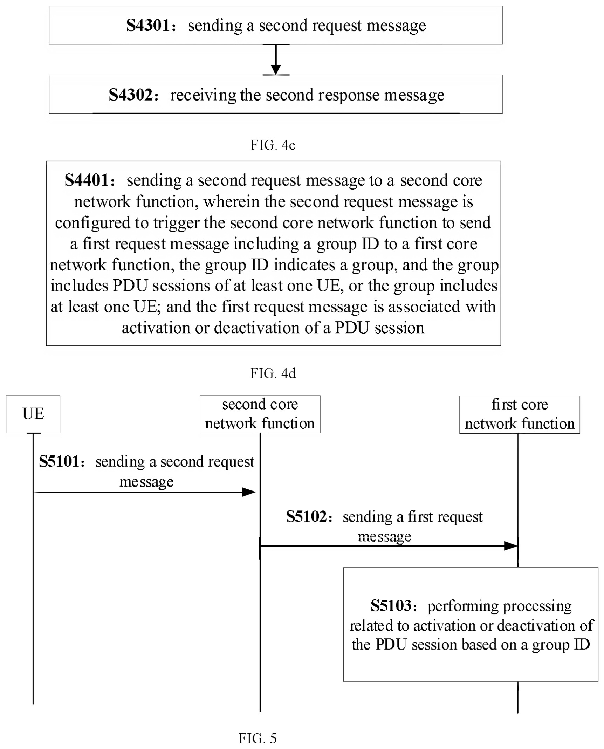

FIG. 4c is a flowchart illustrating a method for processing a PDU session according to an embodiment of the disclosure. As shown in FIG. 4c, embodiments of the disclosure relate to the method for processing a PDU session. The method is performed by a UE 101 and includes the following steps S4301 to S4302.

At step S4301, a second request message is sent.

In some embodiments, for optional implementations of the step S4301, reference may be made to the optional implementations of the step S2101 in FIG. 2a and other related parts in embodiments associated with FIG. 2a, which is not repeated herein.

In some embodiments, the UE sends the second request message to a second core network function.

At step S4302, the second response message is received.

In some embodiments, for optional implementations of the step S4302, reference may be made to the optional implementations of the step S2108 in FIG. 2a and other related parts in embodiments associated with FIG. 2a, which is not repeated herein.

In some embodiments, the UE receives the second response message sent by the second core network function.

FIG. 4d is a flowchart illustrating a method for processing a PDU session according to an embodiment of the disclosure. As shown in FIG. 4d, embodiments of the disclosure relate to the method for processing a PDU session. The method is performed by a UE 101 and includes the following step S4401.

At step S4401, a second request message is sent to a second core network function, in which the second request message is configured to trigger the second core network function to send a first request message including a group ID to a first core network function, the group ID indicates a group, and the group includes PDU sessions of at least one UE, or the group includes at least one UE; and the first request message is associated with activation or deactivation of the PDU session.

In some embodiments, the second request message includes: group-related information, the group-related information is configured to determine a group ID requesting the activation or deactivation of the PDU session.

In some embodiments, the group-related information includes at least one of: a group ID; an XR multimodal service capability supported by the UE; or a PEI of the UE.

In some embodiments, the method further includes: receiving a second response message sent by the second core network function, in which the second response message indicates accepting or rejecting the activation or deactivation of the PDU session.

In some embodiments, the second response message indicates rejecting the activation of the PDU session, and the second response message includes at least one of: a rejecting cause; a restricted access type; or time information indicating a duration for which a UE suspends requesting PDU session activation.

FIG. 5 is an interaction diagram illustrating a method for processing a PDU session according to an embodiment of the disclosure. As shown in FIG. 5, embodiments of the disclosure relate to the method for processing a PDU session. The method is applied to a communication system 100 and includes the following steps S5101 to S5103.

At step S5101, a UE sends a second request message to a second core network function.

At step S5102, the second core network function sends a first request message to a first core network function, in which the first request message includes a group ID; the group ID indicates a group, and the group includes PDU sessions of at least one UE, or the group includes at least one UE; and the first request message is associated with activation or deactivation of the PDU session.

At step S5103, the first core network function performs processing related to the activation or deactivation of the PDU session based on the group ID.

In some embodiments, the above method may include the methods of embodiments on the communication system side, the terminal side, the access network device side, the core network device side, and the like, which is not repeated herein.

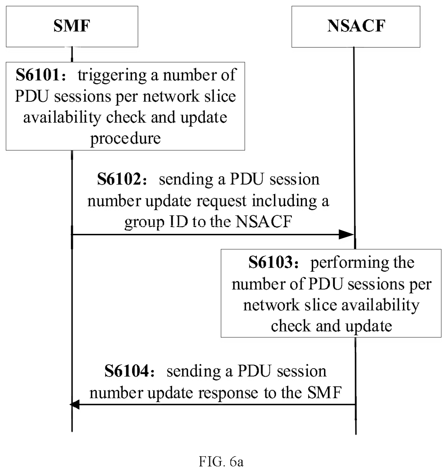

FIG. 6a is an interaction diagram illustrating a method for processing a PDU session according to an embodiment of the disclosure. As shown in FIG. 6a, embodiments of the disclosure relate to the method for processing a PDU session. The method includes the following steps S6101 to S6104.

At step S6101, an SMF triggers a number of PDU sessions per network slice availability check and update procedure.

In some embodiments, the SMF corresponds to the above second core network function in the disclosure.

In some embodiments, within a PDU session establishment procedure, or a PDU session release procedure, the SMF triggers the number of PDU sessions per network slice availability check and update procedure for the network slices that are subject to NSAC.

In some embodiments, if the SMF is not aware of which NSACF to communicate, the SMF performs NSACF discovery and selection.

At step S6102, the SMF sends a PDU session number update request including a group ID to the NSACF.

In some embodiments, the NSACF corresponds to the above first core network function in the disclosure.

In some embodiments, the PDU session number update request carries the group ID, and the group ID indicates an XR service group or an application group to which the PDU session belongs.

In some embodiments, the group ID may be an internal group ID, or a standardized universal group ID.

In some embodiments, the group ID is determined by the SMF.

In some embodiments, the SMF determines the group ID based on a local configuration, an OAM configuration, UDM subscription information, group information related to an XR multimodal service capability sent by a UE, or group information related to a UE PEI, or group information of UE XR multimodal sent by an AMF.

In some embodiments, the PDU session number update request also carries a UE-ID, a PDU session ID, a network slice ID or S-NSSAI(s) that is subjected to NSAC, an access type and a update flag.

In some embodiments, the update flag indicates one of the following values: 'increase', 'decrease', or 'update'.

For example, in a session establishment procedure or when adding a new user plane leg is to be established for an multi-access session, the update flag indicates increase value.

For another example, in a session release procedure or when releasing one or more existing user plane legs are to be released for the multi-access session, the update flag indicates decrease value.

For example, when updating an access type of a PDU session, the update flag indicates update value.

At step S6103, the NSACF performs the number of PDU sessions per network slice availability check and update.

In some embodiments, the NSACF updates the number of PDU sessions established for the network slice indicated by the S-NSSAI based on the group ID.

In some embodiments, the NSACF performs the same NSAC policy for all PDU sessions of the group ID, that is, accepts or rejects activation requests for all PDU sessions of the group ID.

In some embodiments, based on an NSAC policy priority indication, the NSACF performs a UE NSAC function associated with the group ID, that is, performs an availability check for a number of all PDU sessions per network slice associated with the group ID based on a group policy.

In some embodiments, if the update flag parameter indicates increase value, and the maximum number of PDU sessions per network slice established on the S-NSSAI has already been reached, it is determined whether the group ID is in an activation list. If the group ID is in the activation list, the NSACF stores the session ID, associates the session ID with the group ID, and increases or does not increase the number of PDU sessions per network slice established on the S-NSSAI based on the group policy.

In some embodiments, the maximum number of PDU sessions established on the network slice corresponds to the above number of PDU sessions allowed to be activated by the network slice in the disclosure.

In some embodiments, the activation list corresponds to the above first list in the disclosure.

In some embodiments, in the case that the update flag parameter indicates increase value, and the maximum number of PDU sessions per network slice established on the S-NSSAI has already been reached, if the group ID is not in the activation list, a number of activated groups remains unchanged, the group ID is not added to the activated group IDs, and the PDU session activation request is rejected.

In some embodiments, in the case that the update flag parameter indicates increase value, and the maximum number of PDU sessions per network slice established on the S-NSSAI has not already been reached, it is determined whether the group ID is in the activation list. If the group ID is in the activation list, the session ID is associated with the group ID. If the group ID is not in the activation list, the group ID is added to the activation list, and the session ID is associated with the group ID.

It needs to be noted that, if the group ID already has the associated PDU session in the activation list, the activation request for the PDU session is accepted, a number of PDU sessions associated with the UE is increased, and a number of PDU sessions corresponding to the group ID is increased.

In some embodiments, in the case that the update flag parameter indicates increase value, and the maximum number of PDU sessions per network slice established on the S-NSSAI has not already been reached, if the group ID is not in the activation list, and the maximum number of PDU sessions per network slice established on the S-NSSAI is not reached, a number of activated groups remains unchanged, and the group ID is not added to the activated group IDs.

It needs to be noted that the NSACF accepts the PDU session activation request, associates the PDU session ID with the UE-ID and the group ID, and increases a number of PDU sessions activated by the network slice.

In some embodiments, the NSACF is configured with a group threshold, and the NSACF performs a group availability check.

In some embodiments, the group threshold corresponds to the above number of groups allowed by the network slice in the disclosure.

In some embodiments, in the case that the update flag parameter indicates increase value, the NSACF is configured with the group threshold, and the group threshold of the network slice indicated by the S-NSSAI is not reached, if the group ID is already in the activation list, a session ID is added among the PDU session IDs associated with the group ID, and the number of groups activated by the network slice remains unchanged. If the group ID is not in the activation list, the group ID is added to the activation list, and the number of groups activated by the network slice is increased.

It needs to be noted that the NSACF accepts the PDU session activation request, associates the PDU session ID with the UE-ID and the group ID, and increases the number of PDU sessions activated by the network slice.

In some embodiments, in the case that the update flag parameter indicates increase value, the NSACF is configured with the group threshold, and the group threshold of the network slice indicated by the S-NSSAI has already been reached, if the group ID is already in the activation list, a new PDU session ID is added among the PDU session IDs associated with the group ID, and the number of groups activated by the network slice remains unchanged.

It needs to be noted that the NSACF accepts the PDU session activation request, and associates the PDU session ID with the UE-ID and the group ID.

In some embodiments, in the case that the update flag parameter indicates increase value, if the group ID is not in the activation list, and the maximum number of PDU sessions per network slice established on the S-NSSAI is not reached, the number of activated groups remains unchanged, and the group ID is not added to the activated group IDs.

It needs to be noted that the NSACF accepts the PDU session activation request, associates the PDU session ID with the UE-ID and the group ID, and increases the number of PDU sessions activated by the network slice.

In some embodiments, in the case that the update flag parameter indicates increase value, if the group ID is not in the activation list, and the maximum number of PDU sessions per network slice established on the S-NSSAI is reached, the number of activated groups remains unchanged, the group ID is not added to the activated group IDs while the PDU session activation request is rejected.

In some embodiments, if the PDU sessions associated with the group ID involve a plurality of service areas, it is performed based on a maximum number of PDU sessions in the plurality of service areas.

It needs to be noted that, if a number of PDU sessions in some service areas reaches a maximum number of PDU sessions established while a number of PDU sessions in other service areas does not reach the maximum number of PDU sessions established, it is performed based on an NSAC group policy. For example, if there is at least one service area whose maximum number of PDU sessions established is not reached, among the plurality of service areas involved by the PDU sessions associated with the group ID, each activation request for each PDU session associated with the group ID are accepted.

In some embodiments, in a case that the update flag parameter indicates decrease value, the number of PDU sessions for the network slice is decreased, and the session ID is deleted from the session IDs associated with the group ID; if the PDU session is a last PDU session in the group, the group ID is deleted from the activation list.

At step S6104, the NSACF sends a PDU session number update response to the SMF.

In some embodiments, the PDU session number update response indicates accepting or rejecting activation of the PDU session.

In some embodiments, the PDU session number update response includes a result indication, and the result indication includes a reject cause.

For example, the reject cause may be set to that a maximum number of PDU sessions allowed by the network slice has been reached.

In some embodiments, the result indication may include: a restricted access type.

For example, for the multi-access PDU session, the NSACF sends the PDU session number update response including the result indication to the SMF. The result indication may be the maximum number of PDU sessions allowed being reached or being not reached, and the restricted access type.

In some embodiments, if the PDU session number update response indicates rejecting activation of the PDU session, the SMF rejects the PDU session establishment request.

In some embodiments, based on the restricted access type, the SMF restricts the activation of the PDU session of the restricted access type.

In some embodiments, if the PDU session number update response indicates rejecting the activation of the PDU session, the SMF may set a back-off timer and send the back-off timer to the UE.

In some embodiments, the UE receives the back-off timer, and shall not request the activation of the PDU session under the restricted access type until the back-off timer expires.

It should be noted that, if the UE is registered via both accesses, after receiving the back-off timer, the UE may request activation of a PDU session via an access type which is not restricted.

In some embodiments, if the PDU session number update response indicates accepting the activation of the PDU session, but the SMF fails to establish the PDU session, the SMF may trigger the NSACF to delete the corresponding session number and update the response message.

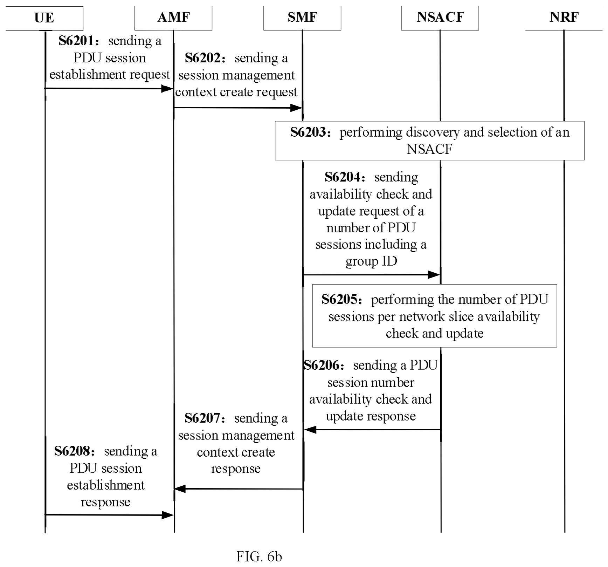

FIG. 6b is an interaction diagram illustrating a method for processing a PDU session according to an embodiment of the disclosure. As shown in FIG. 6b, embodiments of the disclosure relate to the method for processing a PDU session. The method includes the following steps S6201 to S6208.

At step S6201, a UE sends a PDU session establishment request to an AMF.

In some embodiments, the PDU session establishment request carries a UE-ID, a session ID, and/or a network slice ID.

At step S6202, the AMF sends a session management context create request to an SMF.

In some embodiments, the session management context create request (Nsmf_PDU Session_CreateSMContext_Request) carries the UE-ID, the session ID, and/or the network slice ID.

At step S6203, the SMF performs discovery and selection of an NSACF.

In some embodiments, the SMF may perform the discovery and selection of the NSACF based on local configuration information.

In some embodiments, the SMF may send a network service discovery request (Nnrf_NFDiscovery_Request) to a network repository function (NRF), and receive a network service discovery response (Nnrf_NFDiscovera_Response) sent by the NRF to perform discovery of the NSACF.

At step S6204, the SMF sends a PDU session number availability check and update request (i.e., an availability check and update request for a number of PDU sessions) including a group ID.

In some embodiments, for optional implementations of the step S6204, reference may be made to the optional implementations of the step S6102 in FIG. 6a and other related parts in embodiments associated with FIG. 6a, which is not repeated herein.

In some embodiments, an update flag carried in the PDU session number availability check and update request indicates increase value.

At step S6205, the NSACF performs the number of PDU sessions per network slice availability check and update.

In some embodiments, for optional implementations of the step S6205, reference may be made to the optional implementations of the step S6103 in FIG. 6a and other related parts in embodiments associated with FIG. 6a, which is not repeated herein.

At step S6206, the NSACF sends a PDU session number availability check and update response to the SMF.

In some embodiments, for optional implementations of the step S6206, reference may be made to the optional implementations of the step S6104 in FIG. 6a and other related parts in embodiments associated with FIG. 6a, which is not repeated herein.

At step S6207, the SMF sends a session management context create response (Nsmf_PDU Session_CreateSMContext_Response) to the AMF based on the PDU session number availability check and update response.

At step S6208, the AMF sends a PDU session establishment response to the UE.

It may be understood that the SMF sends corresponding response messages to the AMF and the UE based on the PDU session number availability check and update response returned by the NSACF, to accept or reject establishment of the PDU session.

The method for processing a PDU session in embodiments of the disclosure may include at least one of the step S6201 to the step S6208. For example, the step S6201 combined with the step S6203 to the step S6208 may be implemented as an independent embodiment, but is not limited herein.

In some embodiments, the step S6202 is optional, and one or more of the steps may be omitted or substituted in different embodiments. The PDU session establishment request may carry indication information of the NSACF, thus the SMF does not need to perform discovery and selection of the NSACF.

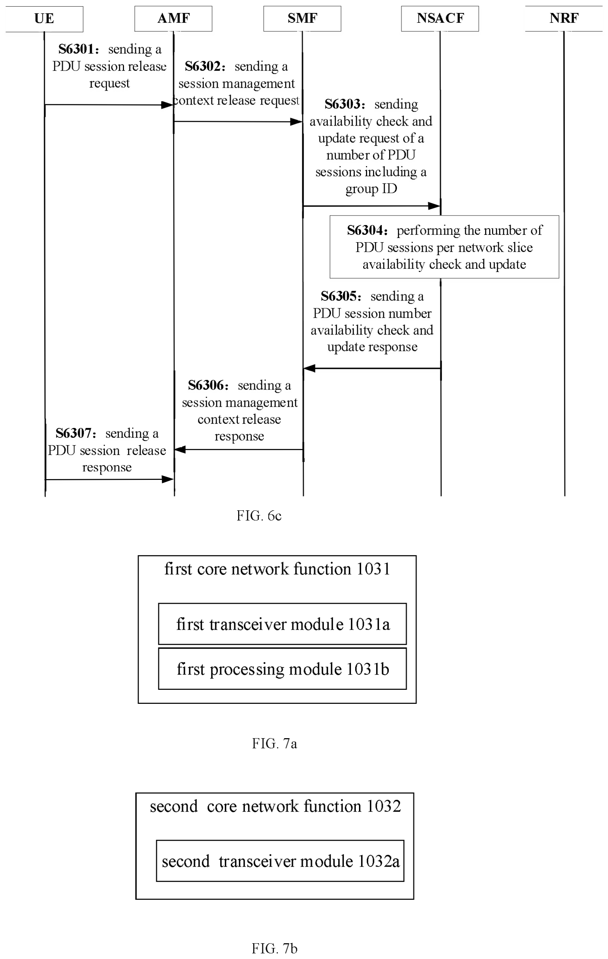

FIG. 6c is an interaction diagram illustrating a method for processing a PDU session according to an embodiment of the disclosure. As shown in FIG. 6c, embodiments of the disclosure relate to the method for processing a PDU session. The method includes the following steps S6301 to S6307.

At step S6301, a UE sends a PDU session release request to an AMF.

In some embodiments, the PDU session release request carries a UE-ID, a session ID, and a network slice ID.

At step S6302, the AMF sends a session management context release request to an SMF.

In some embodiments, the session management context release request (Nsmf_PDUSession_ReleaseSMContext_Request) carries the UE-ID, the session ID, and/or the network slice ID.

At step S6303, the SMF sends a PDU session number availability check and update request to an NSACF.

In some embodiments, for optional implementations of the step S6303, reference may be made to the optional implementations of the step S6102 in FIG. 6a and other related parts in embodiments associated with FIG. 6a, which is not repeated herein.

In some embodiments, an update flag carried in the PDU session number availability check and update request indicates decrease value.

At step S6304, the NSACF performs the number of PDU sessions per network slice availability check and update.

In some embodiments, for optional implementations of the step S6304, reference may be made to the optional implementations of the step S6103 in FIG. 6a and other related parts in embodiments associated with FIG. 6a, which is not repeated herein.

At step S6305, the NSACF sends a PDU session number availability check and update response to the SMF.

In some embodiments, for optional implementations of the step S6305, reference may be made to the optional implementations of the step S6104 in FIG. 6a and other related parts in embodiments associated with FIG. 6a, which is not repeated herein.

At step S6306, the SMF sends a session management context release response to the AMF based on the PDU session number availability check and update response.

At step S6307, the AMF sends a PDU session release response to the UE.

The method for processing a PDU session involved in embodiments of the disclosure may include at least one of the steps S6201 to the S6208.

Embodiments of the disclosure also provide an apparatus for implementing any one of the above methods. For example, an apparatus is provided, including units for performing the steps executed by the terminal in any one of the above methods. Furthermore, another apparatus is provided, including units or modules for performing the steps executed by the network device (e.g., an access network device, a core network node, a core network device, etc.) in any one of the above methods.

It should be understood that a division of units in the above apparatus is only a division of logical functions. In actual implementations, they may be fully or partially integrated into one physical entity, or may be physically separated. In addition, the units or the modules in the apparatus may be implemented in the form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Or, the units or the modules in the apparatus may be implemented in the form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in the form of software called by the processor, or fully implemented in the form of the hardware circuit, or partially implemented in the form of software called by the processor and partially implemented in the form of the hardware circuit.

In embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all units. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 7a is a block diagram illustrating a first core network function according to an embodiment of the disclosure. As shown in FIG. 7a, the first core network function 1031 includes a first transceiver module 1031a and a first processing module 1031b. The first transceiver module 1031a is configured to receive a first request message sent by a second core network function, in which the first request message includes a group ID; the group ID indicates a group, and the group includes PDU sessions of at least one UE, or the group includes at least one UE; and the first request message is associated with activation or deactivation of the PDU session. The first processing module 1031b is configured to perform processing related to the activation or deactivation of the PDU session based on a group ID associated with the PDU session. Optionally, the first transceiver module 1031a is configured to perform steps related to information receiving and sending performed by the first core network function in any of the above methods for processing a PDU session, which is not repeated herein. Optionally, the first processing module 1031b is configured to perform steps related to information determining performed by the first core network function in any of the above methods for processing a PDU session, which is not repeated herein.

FIG. 7b is a block diagram illustrating a second core network function according to an embodiment of the disclosure. As shown in FIG. 7b, the second core network function 1032 includes a second transceiver module 1032a, configured to send a first request message to a first core network function, in which the first request message includes a group ID; the group ID indicates a group, and the group includes PDU sessions of at least one UE, or the group includes at least one UE; and the first request message is associated with activation or deactivation of the PDU session. Optionally, the second transceiver module 1032a is configured to perform steps related to information receiving and sending performed by the second core network function in any of the above methods for processing a PDU session, which is not repeated herein. Optionally, the second core network function 1032 further includes a second processing module, configured to perform steps related to information determining performed by the second core network function in any of the above methods for processing a PDU session, which is not repeated herein.

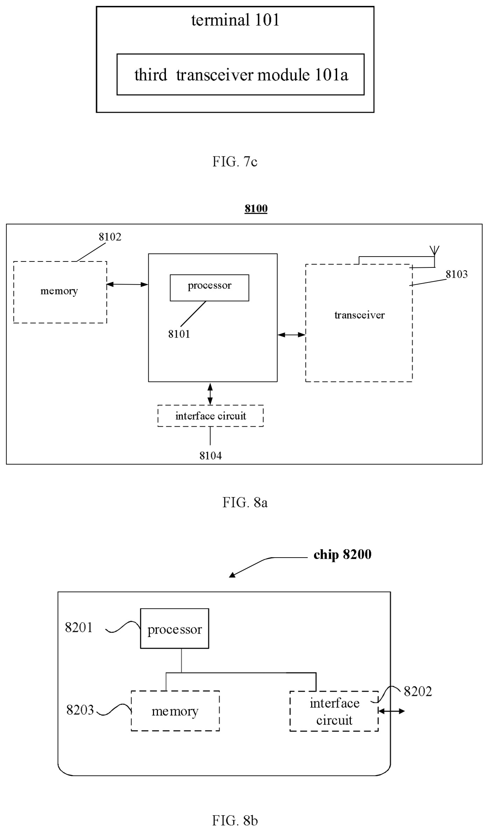

FIG. 7c is a block diagram illustrating a terminal according to an embodiment of the disclosure. As shown in FIG. 7c, the UE 101 includes a third transceiver module 101a, configured to send a second request message to a second core network function, in which the second request message is configured to trigger the second core network function to send a first request message including a group ID to a first core network function, the group ID indicates a group, and the group includes PDU sessions of at least one UE, or the group includes at least one UE; and the first request message is associated with activation or deactivation of the PDU session. Optionally, the third transceiver module 101a is configured to perform steps related to information receiving and sending performed by the terminal in any of the above methods for processing a PDU session, which is not repeated herein.

FIG. 8a is a block diagram of a communication device 8100 according to an embodiment of the disclosure. The communication device 8100 may be a network device (such as an access network device, a core network device, etc.), or a terminal (such as a UE, etc.), or a chip, a chip system, a processor, etc. that supports the network device to implement any one of the methods, or a chip, a chip system, a processor, etc. that supports the terminal to implement any one of the methods for processing a PDU session. The communication device 8100 may be configured to implement the method in the above method embodiments. For details, please refer to the description in the above method embodiments for processing a PDU session.

As shown in FIG. 8a, the communication device 8100 may include one or more processors 8101. The processor 8101 may include a general purpose processor or a dedicated processor. For example, the processor may be a baseband processor or a central processor. The baseband processor may be configured to process a communication protocol and communication data, and the central processor may be configured to control a communication device (e.g., a base station, a baseband chip, a terminal, a terminal chip, a DU or CU, etc.), execute a computer program, and process data of the computer program. The processor 8101 is configured to call instructions so that the communication device 8100 may implement any one of the above communication methods.

In some embodiments, the communication device 8100 may also include one or more memories 8102 for storing instructions. Optionally, all or some of the memories 8102 may also be located outside the communication device 8100.

In some embodiments, the communication device 8100 further includes one or more transceivers 8103. When the communication device 8100 includes one or more transceivers 8103, the communication steps such as sending and receiving in the above methods are performed by the transceiver 8103, and other steps are performed by the processor 8101.

In some embodiments, the transceiver may include a receiver and a transmitter, which may be separate or integrated together. Optionally, the terms such as transceiver, transceiver unit, transceiving circuit, etc. may be used interchangeably; the terms such as transmitter, transmission unit, transmitting circuit, etc. may be used interchangeably; and the terms such as receiver, reception unit, receiving circuit, etc. may be used interchangeably.

Optionally, the communication device 8100 further includes one or more interface circuits 8104. The interface circuit 8104 is connected to the memory 8102. The interface circuit 8104 may be configured to receive signals from the memory 8102 or other devices, and may be configured to send the signals to the memory 8102 or other devices. For example, the interface circuit 8104 may read instructions stored in the memory 8102 and send the instructions to the processor 8101.

The communication device 8100 described in the above embodiments may be a network device or a terminal, but the scope of the communication device 8100 described in the disclosure is not limited, and a structure of the communication device 8100 may not be limited by FIG. 8a. The communication device may be a stand-alone device or may be a part of a larger device. For example, the communication device may be the following: (1) a stand-alone integrated circuit (IC), or a chip, or a system on chip or a subsystem; (2) a set of one or more ICs, optionally, which may also include a storage component for storing data and a computer program: (3) an ASIC, such as a Modem; (4) a module that may be embedded within other devices; (5) a receiver, a terminal, a smart terminal device, a cellular phone, a wireless device, a handset, a mobile unit, a vehicle-mounted device, a network side device, a cloud device, an artificial intelligence device, etc.; (6) others, and so forth.

FIG. 8b is a block diagram of a chip 8200 according to an embodiment of the disclosure. For a case where the communication device 8100 may be a chip or a chip system, reference may be made to the block diagram of the chip 8200 shown in FIG. 8b, which it is not limited herein.

The chip 8200 includes one or more processors 8201. The processor 8201 is configured to call the instructions to cause the chip 8200 to execute any one of the above communication methods.

In some embodiments, the chip 8200 further includes one or more interface circuits 8202. The interface circuit 8202 is connected to a memory 8203. The interface circuit 8202 may be configured to receive signals from the memory 8203 or other devices, and may be configured to send the signals to the memory 8203 or other devices. For example, the interface circuit 8202 may read the instructions stored in the memory 8203 and send the instructions to the processor 8201. Optionally, the terms such as interface circuit, interface, transceiver pin, transceiver, etc. may be used interchangeably.

In some embodiments, the chip 8200 further includes one or more memories 8203 for storing instructions. Optionally, all or some of the memories 8203 may be located outside the chip 8200.

The disclosure also provides a storage medium for storing instructions. When the instructions are running on the communication device 8100, the communication device 8100 is caused to implement any one of the above methods. Optionally, the above storage medium is an electronic storage medium. Optionally, the above storage medium is a computer-readable storage medium. The above storage medium may also be a storage medium readable by other devices. Optionally, the above storage medium may be a non-transitory storage medium. The above storage medium may also be a transitory storage medium.

The disclosure also provides a program product. When the program product is executed by the communication device 8100, the communication device 8100 is caused to implement any one of the above communication methods. Optionally, the above program product is a computer program product.

The disclosure also provides a computer program. When the computer program is running on a computer, the computer is caused to implement any one of the above communication methods.

Other implementations of embodiments of the disclosure will be readily apparent to those skilled in the art from consideration of the specification and practice of the disclosure disclosed herein. This application is intended to cover any modification, use or adaptation of embodiments of the disclosure, these modifications, uses or adaptations follow the general principles of embodiments of the disclosure and include those in the technical field not disclosed by embodiments of the disclosure common knowledge or common technical means. The specification and examples are to be considered exemplary only, with a true scope and spirit of embodiments of the disclosure being indicated by the following claims.

It should be understood that embodiments of the disclosure are not limited to the precise structures described above and shown in the figures, and various modifications and changes can be made without departing from the scope thereof. The scope of embodiments of the disclosure is limited only by the appended claims.

## Claims

1. A method for processing a packet data unit (PDU) session, comprising:
receiving, by a first core network function, a first request message sent by a second core network function, wherein the first request message is configured to request activation or deactivation of at least one PDU session; and
performing processing related to the activation or deactivation of the PDU session based on a group identifier (ID) associated with the PDU session, wherein the group ID indicates a group, and the group comprises PDU sessions of at least one user equipment (UE), or the group comprises at least one UE.

2. The method according to claim 1, wherein the first request message comprises the group ID.

3. The method according to claim 1, further comprising:
determining the group ID based on a first configuration and/or first information.

4. The method according to claim 3, wherein
the first configuration comprises at least one of: a local configuration, or an operation administration and maintenance (OAM) configuration; and/or
the first information, provided by a policy control function (PCF) or a network exposure function (NEF).

5. The method according to any one of claims 1 to 4, wherein performing the processing related to the activation or deactivation of the PDU session based on the group ID comprises:
determining a target policy based on the group ID; and
performing the processing related to the activation or deactivation of the PDU session based on the target policy.

6. The method according to claim 5, wherein performing the processing related to the activation or deactivation of the PDU session based on the target policy comprises at least one of:
for the target policy being a first policy, rejecting or accepting activation of each PDU session associated with the group ID;
for the target policy being a first policy, accepting deactivation of each PDU session associated with the group ID;
for the target policy being a second policy, rejecting activation of one or more PDU sessions associated with the group ID based on a priority; or
for the target policy being a second policy, accepting deactivation of one or more PDU sessions associated with the group ID based on a priority.

7. The method according to claim 6, wherein the priority comprises: a group priority and/or a PDU session priority.

8. The method according to any one of claims 5 to 7, wherein performing the processing related to the activation or deactivation of the PDU session based on the target policy comprises:
performing admission control of PDU session activation on a PDU session associated with a network slice and/or a group associated with a network slice, based on the target policy; and
accepting or rejecting the activation of the PDU session based on a result of the admission control.

9. The method according to claim 8, wherein the first request message comprises:
an update ID, wherein the update ID is configured to request addition or deletion of an activated PDU session associated with the network slice.

10. The method according to claim 9, wherein performing the admission control of the PDU session activation on the PDU session associated with the network slice and/or the group associated with the network slice based on the target policy comprises:
for the update ID that requests addition of the activated PDU session associated with the network slice, determining whether to activate the PDU session based on a number of PDU sessions activated by the network slice, a number of PDU sessions allowed to be activated by the network slice, and the target policy; and/or,
for the update ID that requests addition of the activated PDU session associated with the network slice, determining whether to activate the PDU session based on a number of groups involved in PDU sessions activated by the network slice, a number of groups allowed by the network slice, and the target policy.

11. The method according to claim 10, wherein determining whether to activate the PDU session based on the number of PDU sessions activated by the network slice, the number of PDU sessions allowed to be activated by the network slice, and the target policy comprises at least one of:
in a case that the number of PDU sessions activated by the network slice is equal to or greater than the number of PDU sessions allowed to be activated by the network slice and the target policy is a first policy, determining to reject activation of each PDU session associated with the group ID;
in a case that the number of PDU sessions activated by the network slice is less than the number of PDU sessions allowed to be activated by the network slice and the target policy is the first policy, determining to accept activation of the PDU session;
in a case that the number of PDU sessions activated by the network slice is equal to the number of PDU sessions allowed to be activated by the network slice and the target policy is a second policy, determining to reject activation of each PDU session associated with the group ID;
in a case that the number of PDU sessions activated by the network slice is less than the number of PDU sessions allowed to be activated by the network slice and the target policy is the second policy, and a number of PDU sessions to be activated is less than or equal to a number of PDU sessions that the network slice is further capable of activating, determining to accept activation of each PDU session associated with the group ID; or
in a case that the number of PDU sessions activated by the network slice is less than the number of PDU sessions allowed to be activated by the network slice and the target policy is the second policy, and the number of PDU sessions to be activated is greater than the number of PDU sessions that the network slice is further capable of activating, determining to accept activation of a part of the PDU sessions to be activated and to reject activation of another part of the PDU sessions to be activated, based on a group priority of a group associated with the PDU sessions to be activated and/or a priority of the PDU sessions to be activated,
wherein the number of PDU sessions that the network slice is further capable of activating is a difference between the number of PDU sessions allowed to be activated by the network slice and the number of PDU sessions activated by the network slice.

12. The method according to claim 11, further comprising:
in a case that the activation of the PDU session is accepted and the group ID is not added to a first list, adding the group ID to the first list, and associating a session ID of the activated PDU session with a corresponding group ID, wherein the first list comprises a group ID associated with the activated PDU session; or
in a case that the activation of the PDU session is accepted and the group ID is added to the first list, associating a session ID of the activated PDU session with a corresponding group ID.

13. The method according to claim 10, wherein for the update ID that requests addition of the activated PDU session associated with the network slice, determining whether to activate the PDU session based on the number of groups involved in the PDU sessions activated by the network slice, the number of groups allowed by the network slice, and the target policy comprises:
for the update ID that requests addition of the activated PDU session associated with the network slice, determining to accept or reject activation of the PDU session based on the number of groups involved in the PDU sessions activated by the network slice, the number of groups allowed by the network slice, the target policy, and whether the group ID is added to a first list, wherein the first list comprises a group ID associated with the activated PDU session; and/or
for the update ID that requests addition of the activated PDU session associated with the network slice, determining to accept or reject activation of the PDU session based on the number of groups involved in the PDU sessions activated by the network slice, the number of groups allowed by the network slice, the target policy, and whether the number of PDU sessions activated by the network slice is equal to the number of PDU sessions allowed to be activated by the network slice.

14. The method according to claim 13, wherein for the update ID that requests addition of the activated PDU session associated with the network slice, determining to accept or reject activation of the PDU session based on the number of groups involved in the PDU sessions activated by the network slice, the number of groups allowed by the network slice, the target policy, and whether the group ID is added to the first list comprises at least one of:
in a case that a number of groups associated with the PDU sessions activated by the network slice is less than the number of groups allowed by the network slice, the group ID is not added to the first list, and the target policy is a first policy, determining to accept activation of each PDU session associated with the same group ID;
in a case that the number of groups associated with the PDU sessions activated by the network slice is equal to or greater than the number of groups allowed by the network slice, the group ID is not added to the first list, and the target policy is the first policy, determining to reject activation of each PDU session associated with the same group ID;
in a case that the number of groups associated with the PDU sessions activated by the network slice is less than the number of groups allowed by the network slice, the group ID is added to the first list, and the target policy is the first policy, determining to accept activation of each PDU session associated with the same group ID;
in a case that the number of groups associated with the PDU sessions activated by the network slice is equal to the number of groups allowed by the network slice, the group ID is added to the first list, and the target policy is the first policy, determining to accept activation of each PDU session associated with the same group ID;
in a case that the number of groups associated with the PDU sessions activated by the network slice is less than the number of groups allowed by the network slice, the group ID is not added to the first list, and the target policy is a second policy, adding a group ID of a first priority to the first list, and determining to accept activation of a PDU session in a group of the first priority;
in a case that the number of groups associated with the PDU sessions activated by the network slice is less than the number of groups allowed by the network slice, the group ID is not added to the first list, and the target policy is the second policy, adding a group ID of a second priority to the first list, and determining to reject activation of a PDU session in a group of the second priority, wherein the second priority is lower than the first priority;
in a case that the number of groups associated with the PDU sessions activated by the network slice is less than the number of groups allowed by the network slice, the group ID is added to the first list, and the target policy is the second policy, determining to accept activation of the PDU session; or
in a case that the number of groups associated with the PDU sessions activated by the network slice is equal to the number of groups allowed by the network slice, the group ID is added to the first list, and the target policy is the second policy, determining to accept or reject activation of the PDU session, based on the number of PDU sessions allowed to be activated by the network slice and the number of PDU sessions activated by the network slice.

15. The method according to claim 14, wherein in the case that the number of groups associated with the PDU sessions activated by the network slice is equal to the number of groups allowed by the network slice, the group ID is added to the first list, and the target policy is the second policy, determining to accept or reject activation of the PDU session, based on the number of PDU sessions allowed to be activated by the network slice and the number of PDU sessions activated by the network slice comprises at least one of:
in a case that the number of groups associated with the PDU sessions activated by the network slice is equal to the number of groups allowed by the network slice, the group ID is added to the first list, the target policy is the second policy, and a number of PDU sessions to be activated is less than or equal to a number of PDU sessions that the network slice is further capable of activating, determining to accept activation of the PDU sessions to be activated; or
in a case that the number of groups associated with the PDU sessions activated by the network slice is equal to the number of groups allowed by the network slice, the group ID is added to the first list, the target policy is the second policy, and the number of PDU sessions to be activated is greater than the number of PDU sessions that the network slice is further capable of activating, determining, based on the PDU session, to accept activation of a PDU session to be activated of a third priority and to reject activation of a PDU session to be activated of a fourth priority, wherein the third priority is higher than the fourth priority;
wherein the number of PDU sessions that the network slice is further capable of activating is a difference between the number of PDU sessions allowed to be activated by the network slice and the number of PDU sessions activated by the network slice.

16. The method according to claim 13, wherein for the update ID that requests addition of the activated PDU session associated with the network slice, determining to accept or reject activation of the PDU session based on the number of groups involved in the PDU sessions activated by the network slice, the number of groups allowed by the network slice, the target policy, and whether the number of PDU sessions activated by the network slice is equal to the number of PDU sessions allowed to be activated by the network slice comprises at least one of:
in a case that the number of groups associated with the PDU sessions activated by the network slice is equal to or greater than the number of groups allowed by the network slice, the group ID is not added to the first list, and the number of PDU sessions activated by the network slice is equal to or greater than the number of PDU sessions allowed to be activated by the network slice, determining to reject activation of the PDU sessions to be activated;
in a case that the number of groups associated with the PDU sessions activated by the network slice is equal to or greater than the number of groups allowed by the network slice, the group ID is added to the first list, and the number of PDU sessions activated by the network slice is equal to or greater than the number of PDU sessions allowed to be activated by the network slice, determining to reject activation of the PDU sessions to be activated;
in a case that the number of groups associated with the PDU sessions activated by the network slice is less than the number of groups allowed by the network slice, the group ID is not added to the first list, and the number of PDU sessions activated by the network slice is less than the number of PDU sessions allowed to be activated by the network slice, adding the group ID to the first list, and determining to accept activation of the PDU sessions to be activated;
in a case that the number of groups associated with the PDU sessions activated by the network slice is less than the number of groups allowed by the network slice, the group ID is not added to the first list, the number of PDU sessions activated by the network slice is equal to or greater than the number of PDU sessions allowed to be activated by the network slice, and the target policy is a first policy, determining to reject each PDU session to be activated in the same group; or
in a case that the number of groups associated with the PDU sessions activated by the network slice is less than the number of groups allowed by the network slice, the group ID is not added to the first list, the number of PDU sessions activated by the network slice is equal to or greater than the number of PDU sessions allowed to be activated by the network slice, and the target policy is a second policy, determining to accept activation of a part of the PDU sessions to be activated and to reject activation of another part of the PDU sessions to be activated, based on a group priority and/or a PDU session priority,
wherein the first list comprises a group ID associated with the PDU session activated by the network slice.

17. The method according to claim 1, wherein performing the processing related to the activation or deactivation of the PDU session based on the group ID comprises at least one of:
in a case that the PDU session of one group ID involves a plurality of service areas, and there is at least one service area among the plurality of service areas in which a number of PDU sessions that a network slice is further capable of activating is greater than a number of PDU sessions to be activated associated with the group ID, determining to accept activation of the PDU sessions to be activated; or
in a case that the PDU session of one group ID involves the plurality of service areas, and there is no service area among the plurality of service areas in which the number of PDU sessions that the network slice is further capable of activating is greater than the number of PDU sessions to be activated associated with the group ID, determining to reject activation of the PDU sessions to be activated,
wherein the number of PDU sessions that the network slice is further capable of activating is a difference between a number of PDU sessions allowed to be activated by the network slice and a number of PDU sessions activated by the network slice.

18. The method according to claim 9, wherein performing the processing related to the activation or deactivation of the PDU session based on the group ID comprises:
for the update ID that requests deletion of the activated PDU session associated with the network slice, deactivating the PDU session.

19. The method according to claim 18, further comprising:
in a case that a last PDU session of one group ID is deactivated, deleting the group ID from a first list, wherein the first list comprises a group ID of an activated PDU session.

20. The method according to any one of claims 1 to 19, wherein the first request message comprises:
a PDU session number update request; and/or
a PDU session number availability check and update request.

21. The method according to any one of claims 1 to 20, wherein the first request message carries access type information, the access type information indicates an access type of the PDU session; and
the method further comprises: determining the number of PDU sessions allowed to be activated, based on an access type corresponding to the network slice.

22. The method according to any one of claims 1 to 21, further comprising:
sending a first response message to the second core network function, wherein the first response message is configured to trigger the second core network function to establish or release the PDU session.

23. The method according to claim 22, wherein the first response message indicates accepting or rejecting the activation of the PDU session.

24. The method according to claim 23, wherein the first response message indicates rejecting the activation of the PDU session, and the first response message comprises at least one of:
a rejecting cause;
a restricted access type; or
time information indicating a duration for which a UE suspends requesting PDU session activation.

25. The method according to any one of claims 1 to 24, wherein the first core network function is a network slice admission control function (NSACF).

26. The method according to claim 25, wherein the NSACF is:
an NSACF in a single central architecture;
an NSACF within a service area related to the second core network function in a non-hierarchical multi-NSACF architecture; or
a local NSACF or a primary NSACF in a hierarchical multi-NSACF architecture.

27. A method for processing a packet data unit (PDU) session, comprising:
sending, by a second core network function, a first request message to a first core network function, wherein the first request message comprises a group identifier (ID); the group ID indicates a group, and the group comprises PDU sessions of at least one user equipment (UE), or the group comprises at least one UE; and the first request message is associated with activation or deactivation of the PDU session.

28. The method according to claim 27, further comprising:
determining a group ID requesting the activation or deactivation of the PDU session.

29. The method according to claim 28, wherein determining the group ID requesting the activation or deactivation of the PDU session comprises at least one of:
determining the group ID requesting the activation or deactivation of the PDU session, based on a first configuration;
determining the group ID requesting the activation or deactivation of the PDU session, based on subscription information of a unified data management (UDM) function;
determining the group ID requesting the activation or deactivation of the PDU session, based on an extended reality (XR) multimodal service capability supported by the UE;
determining the group ID requesting the activation or deactivation of the PDU session, based on a permanent equipment ID (PEI) of the UE; or
determining the group ID requesting the activation or deactivation of the PDU session, based on UE XR multimodal information sent by an access and mobility management function (AMF).

30. The method according to claim 29, wherein the first configuration comprises at least one of:
a local configuration; or
an operation administration and maintenance (OAM) configuration.

31. The method according to any one of claims 27 to 30, wherein the group ID is used by the first core network function to determine a target policy, and the target policy is configured to perform processing related to the activation or deactivation of the PDU session.

32. The method according to claim 31, wherein the target policy comprises at least one of:
a first policy, configured to reject or accept activation of each PDU session associated with the group ID;
a first policy, configured to reject deactivation of each PDU session associated with the group ID;
a second policy, configured to reject activation of one or more PDU sessions associated with the group ID based on a priority; or
a second policy, configured to accept deactivation of one or more PDU sessions associated with the group ID based on a priority.

33. The method according to claim 32, wherein the priority comprises: a group priority and/or a PDU session priority.

34. The method according to any one of claims 31 to 33, wherein the first request message is configured to trigger the first core network function to perform admission control of PDU session activation on a PDU session associated with a network slice and/or a group associated with a network slice, based on the target policy; and a result of the admission control is configured to determine to accept or reject the activation of the PDU session.

35. The method according to any one of claims 27 to 34, wherein sending, by the second core network function, the first request message comprises:
receiving a second request message, and sending, by the second core network function, the first request message.

36. The method according to claim 35, wherein the first request message comprises:
an update ID, wherein the update ID is configured to request addition or deletion of an activated PDU session associated with the network slice.

37. The method according to claim 36, wherein the second request message is a PDU session establishment request, and the update ID requests addition of the activated PDU session associated with the network slice; and/or
the second request message is a PDU session release request, and the update ID requests deletion of the activated PDU session associated with the network slice.

38. The method according to any one of claims 27 to 37, wherein the first request message carries access type information, the access type information indicates an access type of the PDU session; the access type is configured to determine a number of PDU sessions allowed to be activated for the access type corresponding to the network slice.

39. The method according to any one of claims 27 to 38, further comprising:
receiving a first response message; and
establishing or releasing the PDU session based on the first response message.

40. The method according to claim 39, wherein the first response message indicates accepting or rejecting the activation of the PDU session.

41. The method according to claim 40, wherein the first response message indicates rejecting the activation of the PDU session, and the first response message comprises at least one of:
a rejecting cause;
a restricted access type; or
time information indicating a duration for which a UE suspends requesting PDU session activation.

42. The method according to claim 41, further comprising:
restricting activation of a PDU session of the restricted access type; and/or
restricting the UE from requesting the PDU session activation within the duration indicated by the time information.

43. The method according to any one of claims 27 to 42, wherein the second core network function is a session management function (SMF).

44. A method for processing a packet data unit (PDU) session, comprising:
sending, by a user equipment (UE), a second request message to a second core network function,
wherein the second request message is configured to trigger the second core network function to send a first request message comprising a group identifier (ID) to a first core network function, the group ID indicates a group, and the group comprises PDU sessions of at least one UE, or the group comprises at least one UE; and the first request message is associated with activation or deactivation of the PDU session.

45. The method according to claim 44, wherein the second request message comprises: group-related information, the group-related information is configured to determine a group ID requesting the activation or deactivation of the PDU session.

46. The method according to claim 45, wherein the group-related information comprises at least one of:
a group ID;
an extended reality (XR) multimodal service capability supported by the UE; or
a permanent equipment ID (PEI) of the UE.

47. The method according to any one of claims 44 to 46, further comprising:
receiving a second response message sent by the second core network function, wherein the second response message indicates accepting or rejecting the activation or deactivation of the PDU session.

48. The method according to claim 47, wherein the second response message indicates rejecting the activation of the PDU session, and the second response message comprises at least one of:
a rejecting cause;
a restricted access type; or
time information indicating a duration for which a UE suspends requesting PDU session activation.

49. A method for processing a packet data unit (PDU) session, comprising:
sending, by a user equipment (UE), a second request message to a second core network function;
sending, by the second core network function, a first request message to a first core network function, wherein the first request message is configured to request activation or deactivation of at least one PDU session; and
performing, by the first core network function, processing related to the activation or deactivation of the PDU session based on a group identifier (ID) associated with the PDU session, wherein the group ID indicates a group, and the group comprises a PDU sessions of at least one UE, or the group comprises at least one UE.

50. A first core network function, comprising:
a first transceiver module, configured to receive a first request message sent by a second core network function, wherein the first request message is configured to request activation or deactivation of at least one packet data unit (PDU) session; and
a first processing module, configured to perform processing related to the activation or deactivation of the PDU session based on a group identifier (ID) associated with the PDU session, wherein the group ID indicates a group, and the group comprises PDU sessions of at least one user equipment (UE), or the group comprises at least one UE.

51. A second core network function, comprising:
a second transceiver module, configured to send a first request message to a first core network function, wherein the first request message comprises a group identifier (ID); the group ID indicates a group, and the group comprises packet data unit (PDU) sessions of at least one user equipment (UE), or the group comprises at least one UE; and the first request message is associated with activation or deactivation of the PDU session.

52. A core network device, comprising:
a second core network function, configured to send a first request message to a first core network function, wherein the first request message comprises a group identifier (ID); the group ID indicates a group, and the group comprises packet data unit (PDU) sessions of at least one user equipment (UE), or the group comprises at least one UE; and the first request message is associated with activation or deactivation of the PDU session; and
a first core network function, configured to receive the first request message and perform processing related to the activation or deactivation of the PDU session based on the group ID.

53. A terminal comprising:
a third transceiver module, configured to send a second request message to a second core network function,
wherein the second request message is configured to trigger the second core network function to send a first request message comprising a group identifier (ID) to a first core network function, the group ID indicates a group, and the group comprises packet data unit (PDU) sessions of at least one UE, or the group comprises at least one UE; and the first request message is associated with activation or deactivation of the PDU session.

54. A communication system, comprising: a user equipment, configured to perform the method according to any one of claims 44 to 48, a first core network function, configured to perform the method according to any one of claims 1 to 26, and a second core network function, configured to perform the method according to any one of claims 27 to 43.

55. A first core network function, comprising:
one or more processors;
wherein the one or more processors are configured to call instructions to cause the first core network function to implement the method according to any one of claims 1 to 26.

56. A second core network function, comprising:
one or more processors;
wherein the one or more processors are configured to call instructions to cause the second core network function to implement the method according to any one of claims 27 to 43.

57. A core network device, comprising:
one or more processors;
wherein the one or more processors are configured to call instructions to cause the core network device to implement the method according to any one of claims 1 to 26, or to implement the method according to any one of claims 27 to 43.

58. A user equipment (UE), comprising:
one or more processors;
wherein the one or more processors are configured to call instructions to cause the UE to implement the method according to any one of claims 44 to 48.

59. A storage medium storing instructions, wherein the instructions, when executed on a communication device, cause the communication device to implement the method according to any one of claims 1 to 26, or to implement the method according to any one of claims 27 to 43, or to implement the method according to any one of claims 44 to 48.
